(19) Europäisches Patentamt / European Patent Office / Office européen des brevets

(11) **EP 2 120 444 A1**

(12) **EUROPEAN PATENT APPLICATION**

(43) Date of publication:
**18.11.2009 Bulletin 2009/47**

(51) Int Cl.:
***H04N 1/00*** (2006.01)

(21) Application number: **09158764.2**

(22) Date of filing: **24.04.2009**

(84) Designated Contracting States:
**AT BE BG CH CY CZ DE DK EE ES FI FR GB GR HR HU IE IS IT LI LT LU LV MC MK MT NL NO PL PT RO SE SI SK TR**

(30) Priority: **16.05.2008 JP 2008129972**

(71) Applicant: **Canon Kabushiki Kaisha**
**Tokyo 146-8501 (JP)**

(72) Inventor: **Misawa, Reiji**
**Ohta-ku Tokyo (JP)**

(74) Representative: **Hitching, Peter Matthew**
**Canon Europe Ltd**
**3 The Square**
**Stockley Park**
**Uxbridge**
**Middlesex**
**UB11 1ET (GB)**

(54) **Image processing apparatus handling copy-forgery-inhibited pattern image data**

(57) To solve a problem that, when an output object with a copy-forgery-inhibited pattern is copied on a copying machine (10) into which a super-resolution technology is introduced, a hidden character is not revealed. An image processing apparatus (10) includes unit (1806, 1811) for obtaining a plurality of low-resolution images, a super-resolution processing unit (1851) for generating a high-resolution image using the plurality of low-resolution images, a copy-forgery-inhibited pattern detection unit (1852) for detecting a pattern of a copy-forgery-inhibited pattern using the high-resolution image, and a control unit (11) for switching between the high-resolution image and the low-resolution image based on the detection result of the copy-forgery-inhibited pattern detection unit to output an image.

FIG.30

EP 2 120 444 A1

**Description**

BACKGROUND OF THE INVENTION

Field of the Invention

The present invention relates to an image processing apparatus handling copy-forgery-inhibited pattern image data.

Description of the Related Art

There exists a special paper called forgery preventing paper. The forgery preventing paper is embedded with a character string like "COPY" so as not to be recognized at first glance. When the forgery preventing paper is duplicated, the embedded character string appears on a copy thereof. This makes it possible to easily distinguish a manuscript of the document, which is prepared by using such a forgery preventing paper, from the copy thereof. Further, this can make a person hesitate to use a copy of the document.

Since the forgery preventing paper has an effect as described above, it has been used for creating a residence certificate, a business form and the like. However, there is a problem that the price of forgery preventing paper is higher than that of plain paper. There is also another problem that only a character sting embedded at the time of producing a paper appears on the copy thereof.

Under such circumstances, recently, a new technology, which can provide the same effect as that of an forgery preventing paper, draws attention (for example, refer to Japanese Patent Laid-Open No. 2001-197297). In this technology, manuscript image data created by using a computer is synthesized with image data of a copy-forgery-inhibited pattern (which is also called a copy restriction tint block), and the image data with the copy-forgery-inhibited pattern obtained by the synthesis is output on a plain paper. The copy-forgery-inhibited pattern image data is embedded with a character string and the like. Therefore, on a copy obtained by duplicating the image data with the copy-forgery-inhibited pattern, the embedded character string appears as same as the case the forgery preventing paper is used.

Note that, since a plain paper is used, the above technology has an advantage that, compared to the case a forgery preventing paper is used, manuscript can be created at a lower cost. Also, the technology is capable of generating image data having a different copy-forgery-inhibited pattern every time when a new manuscript is created. Therefore, the technology has an advantage that color of copy-forgery-inhibited pattern in the copy-forgery-inhibited pattern image data, a character string embedded in the copy-forgery-inhibited pattern and the like can be set arbitrarily.

The copy-forgery-inhibited pattern image data includes an area "remained" on a copy thereof and an area "disappeared" (or "thinner than the remained area"). On a manuscript, the reflection densities in these two areas are substantially identical to each other. Therefore, it is difficult for human eyes to recognize an embedded character string like "COPY". The wording "remained" here means a state that images on a manuscript are precisely reproduced on a copy. Also, the wording "disappeared" here means a state that images on a manuscript are hardly reproduced on a copy. Hereinafter, the "remained" area on a copy will be referred to as "latent image portion"; while the area "disappeared" (or "thinner than "remained" area) on a copy will be referred to as "background portion".

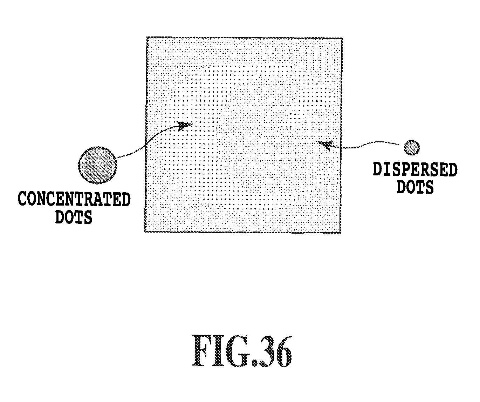

Fig. 36 illustrates a state of dots in copy-forgery-inhibited pattern image data. In Fig. 36 an area where dots are disposed densely is a latent image portion; while an area where dots are dispersed is a background portion. In these two areas, dots are generated by means of different halftone dot processing and/or different dithering. For example, dots in the latent image portion are generated by a halftone dot processing using small number of lines; while dots in the background portion are generated by a halftone dot processing using large number of lines. Alternatively, dots in the latent image portion are generated by using a dot concentrated-type dither matrix; while dots in the background portion are generated by using a dot dispersed-type dither matrix.

The reproducing performance of a copying machine depends on the input resolution and the output resolution of the copying machine. Therefore, the reproducing performance of the copying machine has a limitation. A case is assumed where dots in a latent image portion of copy-forgery-inhibited pattern image data are formed to be larger than dots reproducible by the copying machine; and dots in a background portion thereof are formed to be smaller than dots reproducible. In this case, generally, dots in the latent image portion can be reproduced; but dots in the background portion are hardly reproduced on a copy. As a result, the latent image portion is reproduced more densely than the background portion on the copy. Hereinafter, a phenomenon that a latent image portion is reproduced more densely than a background portion on a copy, and thereby character strings embedded therein emerge visibly will be referred to as image visualization.

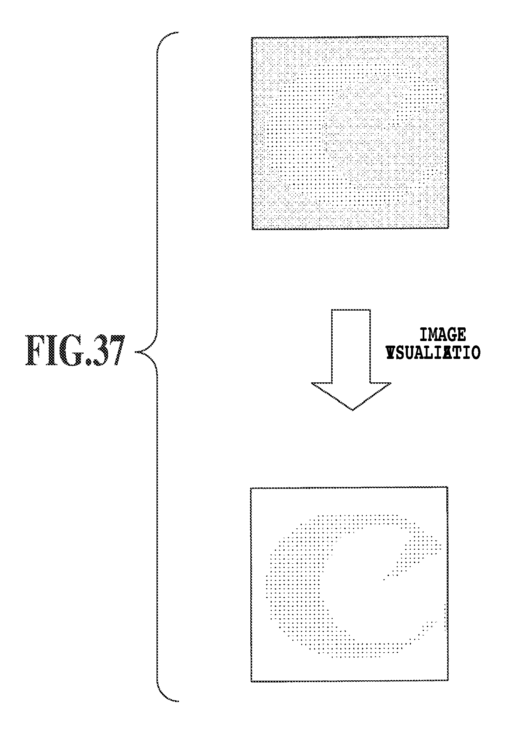

Figs. 37(a) and 37(b) illustrate the image visualization. It is schematically shown that concentrated dots (large dots) are reproduced on a copy, while dispersed dots (small dots) are not precisely reproduced on the copy.

Note that, the copy-forgery-inhibited pattern image data is not limited to the above arrangement, and has only to be arranged so that character strings such as "COPY", signs or patterns appear to be recognizable (image-visualized) by human eyes on a copy. Also, even when the character string like "COPY" is represented in a state of outline characters on a copy, the purpose of the copy-forgery-inhibited pattern image data is achieved. In this case, it is needless to say that the area of "COPY" is referred to as background portion.

The copy-forgery-inhibited pattern includes components of a background portion and a latent image portion. It is important that these two types of areas are represented on a manuscript with reflection densities substantially identical to each other. For example, Japanese Patent Laid-Open No. 2006-229316 discloses a technique for compensating deterioration of dot reproducing performance over time of image forming apparatus. Specifically, a technique is described in which calibration of the latent image portion and the background portion in a copy-forgery-inhibited pattern using screens of various numbers of lines is carried out, and screens for the background portion and the latent image portion in the copy-forgery-inhibited pattern are changed.

On the other hand, there exists a technology called "super-resolution" that improves the resolution by using plural images having a certain resolution. By using the technology, a low-resolution image can be converted into a high-resolution image; thereby a high-resolution image can be obtained by using the same conventional device. (For example, refer to "Super-resolution processing using plural digital image data" (Ricoh Technical Report No. 24, November, 1998). To implement the super-resolution technology, plural images having phases different from each other in sub-pixels (a unit smaller than one pixel) are required. The super-resolution technology is widely applied to the field of video processing and the like.

To introduce the super-resolution technology into a copying machine, it is necessary to obtain plural low-resolution images having phases different from each other in sub-pixels, from a scanner unit of the copying machine. Alternatively, a plurality of similar low-resolution images may be obtained from an external unit such as an image forming apparatus, and PCs connected over a network. Then, by generating a high-resolution image through the super-resolution processing using the plurality of low-resolution images, it is possible to obtain a high-resolution image of higher image quality than by generating one high-resolution image from one low-resolution image.

However, when an output object with the above-described copy-forgery-inhibited pattern is copied using a copying machine into which the super-resolution technology is introduced, there is a problem that a hidden character does not appear.

Generally, background portion (small dots) of the plural low-resolution images obtained by scanning using a scanner unit of the copying machine is planarized (indistinct) . However, the resolution becomes high due to the super-resolution processing and thus the density becomes locally higher. Therefore, the density of the background portion is hardly reduced even after carrying out image processing such as background removal or the like. Therefore, since a desired density difference is not obtained between the latent image portion and the background portion, embedded character strings hardly emerge visually.

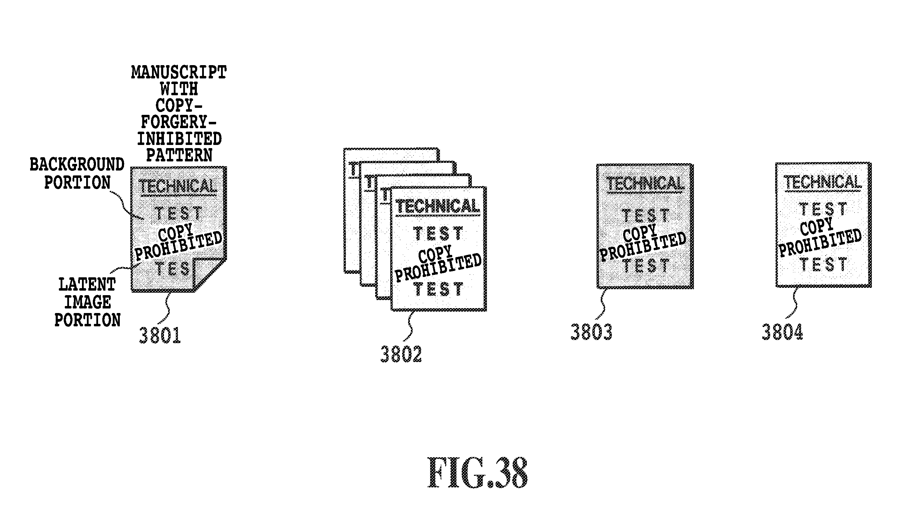

Referring to Fig. 38, a particular example will be described. Reference numeral 3801 denotes an example of a paper manuscript with a copy-forgery-inhibited pattern. A character portion of "COPY PROHIBITED" is a latent image portion; and the other portion is a background portion. A scanner unit of a copying machine reads the paper manuscript with a copy-forgery-inhibited pattern 3801 as a plurality of images having different phases from each other in sub-pixels as shown in 3802. Reference numeral 3803 illustrates a result of the super-resolution processing using the plurality of images. The higher resolution image can be obtained by using the larger number of images used for the super-resolution processing.

Reference numeral 3803 schematically illustrates that the character strings the resolution of which is higher than that of the character strings 3802. Also, reference numeral 3803 schematically illustrates a state that the resolution of the background portion is higher than that of the background portion in 3802 and the density thereof is locally increased. Reference numeral 3804 illustrates a result of an output of the high-resolution image. As shown in 3804, when the high-resolution image is output, desired difference is not generated in the density between the latent image portion and the background portion. Therefore, the embedded character string does not emerge visibly.

SUMMARY OF THE INVENTION

The present invention makes it possible for a hidden character of an output object with a copy-forgery-inhibited pattern to appear even when a copy is made using a copying machine into which a super-resolution technology is introduced.

The present invention in its first aspect provides an image processing apparatus as specified in claims 1 to 7.

The present invention in its second aspect provides an image processing method as specified in claims 8 and 9.

According to the present invention, by switching between the high-resolution image and the low-resolution image to output an image, based on a detection result of a copy-forgery-inhibited pattern, it becomes possible to cause hidden characters of an output object with the copy-forgery-inhibited pattern to appear while maintaining the high-resolution image of a general manuscript.

Further features of the present invention will become apparent from the following description of exemplary embodiments (with reference to the attached drawings).

BRIEF DESCRIPTION OF THE DRAWINGS

Fig. 1 is a block diagram illustrating a configuration of a printing system according to an embodiment of the present invention;

Fig. 2 is an external view of an image forming apparatus 10;

Fig. 3 illustrates a mounting mode of an area sensor of a scanner unit 13 according to an embodiment 1;

Figs. 4A to 4E are diagrams showing an example of images obtained by the scanner unit 13 according to the embodiment 1;

Fig. 5 is a diagram illustrating a configuration of the area sensor;

Fig. 6 is a diagram illustrating a constitution of a read section of an image processing apparatus 1;

Fig. 7 is a diagram illustrating a manuscript image to be read by the area sensor;

Figs. 8A to 8E are diagrams illustrating a method of obtaining line image data;

Figs. 9A to 9E are diagrams illustrating the method of obtaining line image data;

Figs. 10A to 10E are diagrams illustrating the method of obtaining line image data;

Figs. 11A to 11E are diagrams illustrating the method of obtaining line image data;

Fig. 12A and Fig. 12B are diagrams illustrating image data read by a line sensor in the area sensor;

Fig. 13 is a diagram illustrating the structure of an area sensor which is mounted obliquely;

Figs. 14A to 14E are diagrams illustrating a method of obtaining line image data with the oblique area sensor;

Figs. 15A to 15E are diagrams illustrating the method of obtaining line image data with the oblique area sensor;

Figs. 16A to 16E are diagrams illustrating the method of obtaining line image data with the oblique area sensor;

Fig. 17A and Fig. 17B are diagrams illustrating image data read by the line sensor in the oblique area sensor;

Fig. 18 is a block diagram illustrating the configuration of a controller 11;

Fig. 19 is a diagram conceptually illustrating tile data;

Fig. 20 is an explanatory diagram illustrating a super-resolution processing in detail;

Fig. 21 is an explanatory diagram illustrating the super-resolution processing in detail;

Fig. 22 is a block diagram illustrating the internal configuration of a scanner image processing section 1812;

Fig. 23 is a flow chart illustrating a printer image processing section 1815;

Fig. 24 is a diagram illustrating an operation display (1) on the image forming apparatus 10;

Fig. 25 is a diagram illustrating an operation display (2) on the image forming apparatus 10;

Fig. 26 is a diagram illustrating an operation display (3) on the image forming apparatus 10;

Fig. 27 is a diagram illustrating an operation display (4) on the image forming apparatus 10;

Fig. 28 is a diagram illustrating a flow of copying a general manuscript according to the embodiment 1;

Fig. 29 is a diagram illustrating a flow (1) of copying a manuscript with a copy-forgery-inhibited pattern according to the embodiment 1;

Fig. 30 is a flowchart in the embodiment 1;

Fig. 31 is a diagram illustrating a flow of copying a manuscript with a copy-forgery-inhibited pattern according to an embodiment 2;

Fig. 32 is a flowchart in the embodiment 2;

Fig. 33 is a diagram illustrating a flow of copying a manuscript with a copy-forgery-inhibited pattern according to the embodiment 3;

Fig. 34 is a flowchart in an embodiment 3;

Fig. 35 is a relation table that defines the kinds of line number and a maximum number that limits diluteness of background portion;

Fig. 36 is a diagram illustrating a state of dots (1) in copy-forgery-inhibited pattern image data;

Fig. 37 is a diagram illustrating a state of dots (2) in the copy-forgery-inhibited pattern image data; and

Fig. 38 is a diagram illustrating a conventional process flow of copying a manuscript with a copy-forgery-inhibited pattern.

DESCRIPTION OF THE EMBODIMENTS

[Embodiment 1]

Best modes for carrying out the present invention will be described below with reference to the drawings.

In the embodiments described below, it is assumed that a latent image portion includes a copy-forgery-inhibited pattern image having hidden character strings and/or latent symbols set therein, the copy-forgery-inhibited pattern image is synthesized with a desired content image to produce a manuscript (original manuscript print), and thus the manuscript is output. Also, the description will be given for a copy of the manuscript in which a background portion becomes more dilute than the latent image portion, and thereby the hidden character strings and/or latent symbols emerge to be recognized.

However, the copy-forgery-inhibited pattern image according to the invention is not limited to the above. For example, the mode may be employed in which hidden character strings and/or latent symbols are set as a background portion as described above, and a peripheral area of the background portion is set as a latent image portion; thereby the hidden character strings and/or the latent symbols are represented as outlined characters on the copy.

<Printing system>

First of all, the configuration of a printing system according to the embodiment of the invention is described.

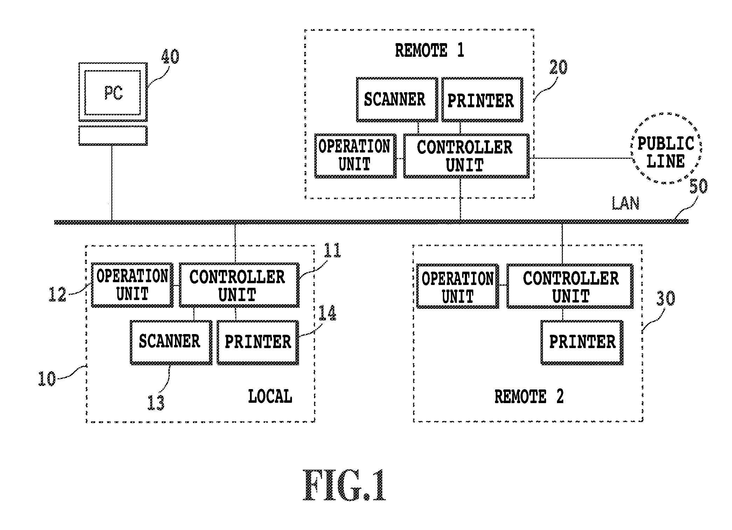

Fig. 1 is a block diagram illustrating the configuration of a printing system according to one embodiment of the invention.
In this system, a host computer 40 and three image forming apparatuses (10, 20 and 30) are connected to a LAN 50. However, in a printing system to which the invention is applicable, the number of the apparatuses to be connected to the LAN 50 is not limited to the above. In the embodiment, a LAN is employed as a connection method, but the connection method is not limited to the LAN. For example, any network such as WAN (public line), a serial transmission system such as USB, or a parallel transmission system such as Centronics and SCSI are applicable.
The host computer (hereinafter, referred to as PC) 40 has functions of a personal computer. The PC 40 is capable of transmitting/receiving files and e-mails using FTP or SMB protocol via the LAN 50 or WAN. The PC 40 is also able to issue a print command to the image forming apparatuses 10, 20 and 30 via a printer driver.
The image forming apparatuses 10 and 20 have the identical configuration each other. The image forming apparatus 30 is the one that has a print function only but does not have a scanner unit provided to both of the image forming apparatuses 10 and 20. In the following description, to simplify the description, paying attention to the image forming apparatus 10 of the two apparatuses 10 and 20, its configuration will be described in detail.
The image forming apparatus 10 includes a scanner unit 13 as an image input device, a printer unit 14 as an image output device, a controller (controller Unit) 11 that controls entire operation of the image forming apparatus 10 and an operation unit 12 as a user interface (UI).

<Image forming apparatus 10>

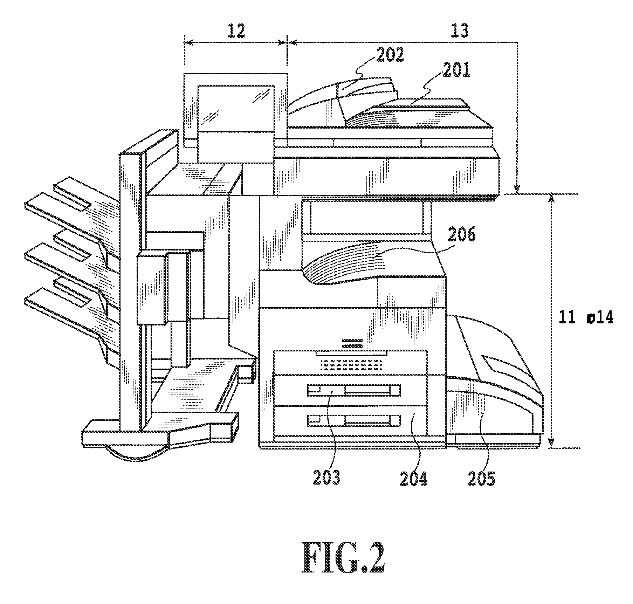

The image forming apparatus 10 shown in Fig. 1 will be further described in detail with reference to Fig. 2. Fig. 2 illustrates an external view of the image forming apparatus 10.
The scanner unit 13 exposes and scans an image on a manuscript, inputs the resultant reflected light to an image sensor to thereby convert the information of the image into electrical signals. The scanner unit 13 further converts the electrical signals into luminance signals composed of the respective colors R, G and B, and outputs the luminance signals as image data to the controller 11.
According to the embodiment, the image sensor in the scanner unit 13 is composed of an area sensor. Further, it is configured such that the area sensor is disposed obliquely so as to obtain a plurality of images having different phases from each other in sub-pixels with respect to a main scanning direction and a sub scanning direction for each of RGB channels.

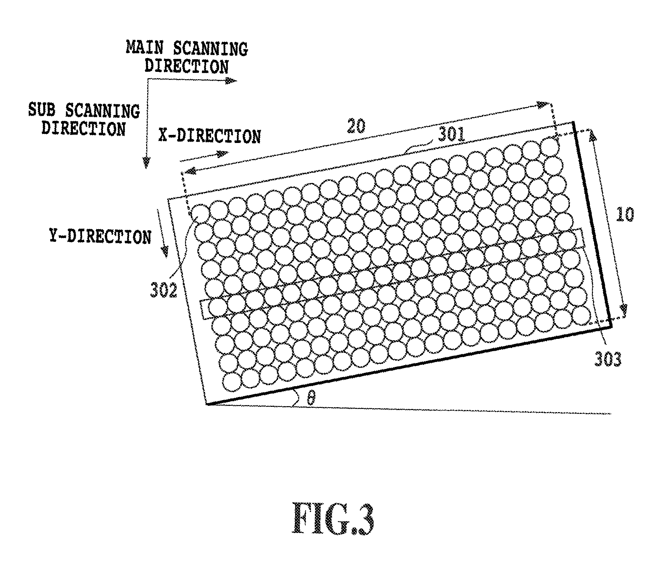

Fig. 3 illustrates a mounting mode of the area sensor according to the embodiment. In Fig. 3, reference numeral 301 denotes an area sensor device. Reference numeral 302 denotes a pixel sensor. In this description, the area sensor device 301 includes 20 pixels in the main scanning direction and 10 pixels in the sub scanning direction. The number of the pixel sensors in this example is given for the convenience of description of the purpose and structure of the area sensor according to the embodiment, and it is not limited to the number of the pixel sensors shown in Fig. 3. It is needless to say that practically the number of the pixel sensors may be the number of the pixel sensors employed in digital cameras.
Skew angle of the mounted area sensor is represented by θ. The positions of the respective constituting pixel sensors are represented by defining the left upper end portion of the area sensor as an origin, the main scanning direction as X-direction; and the sub scanning direction as Y-direction (in both cases, skew angle is θ=0). Reference numeral 303 denotes a group of pixel sensors included in one line and constituting the area sensor 301. Specifically, the group 303 includes twenty pixel sensors constituting the main scanning direction.
According to the embodiment, a read operation is performed by handling the group of pixel sensors included in one line as shown by 303 as one line sensor. By obliquely disposing the area sensor as in the example, the image can be obtained in a state that the phases are displaced with respect to the main scanning direction and the sub scanning direction.

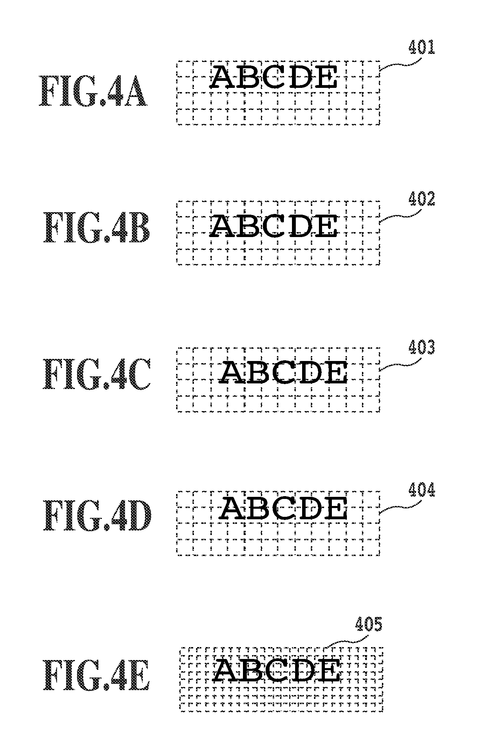

Figs. 4A to 4E illustrate an example of images obtained by using the area sensor obliquely disposed as described above. Each of the images 401 to 404 in Figs. 4A to 4D are obtained in a state that each of the phases is displaced each other with respect to the main scanning direction and the sub scanning direction.

Here, a super-resolution processing and the method of obtaining a low-resolution images the phases of which are displaced from each other in a state that the area sensors are disposed obliquely will be described below.

The method of creating one high-resolution image from a plurality of low-resolution images will be described later. There are some conditions for carrying out the super-resolution processing.

First, a plurality of pieces of continuous image data, in which each of the reading position of the manuscript is minutely displaced each other in the main scanning direction and/or the sub scanning direction, is required with reference to one image, which is read at the resolution of the sensors in the reading device.

That is, the plurality of pieces of continuous image data, in which the manuscript read out position is minutely displaced, is required.

Among a plurality of pieces of continuous low-resolution image data, between the pieces of neighboring image data, the manuscript position read out by the sensor has to be displaced by a distance smaller than one pixel (sub-pixel).

Hereinafter, the position of the pixel read out from the manuscript image will be referred to as "phase". Also, when the phase displaces, it will be referred to as "phase displaces"; and the displacement of the read out pixel will be referred to as "phase displacement".

The low-resolution used here is not limited to 300 dpi; but means a resolution of image that is output by the device in ordinary printing.

According to the embodiment, the area sensor is disposed obliquely as described above, and thereby a plurality of images having phases different from each other with respect to the main scanning direction and the sub scanning direction, for each of RGB channels, can be obtained.

As shown in Figs. 4A to 4D, the images 401 to 404 are obtained in a state that each of the phases is displaced with respect to the main scanning direction and the sub scanning direction.

(Area sensor)

According to the embodiment, the area sensor reading the image is composed of an area sensor. The area sensor is an image sensor applied to digital cameras and the like, and has a configuration in which pixel sensors for reading the data are disposed two-dimensionally in the main scanning direction and the sub scanning direction.

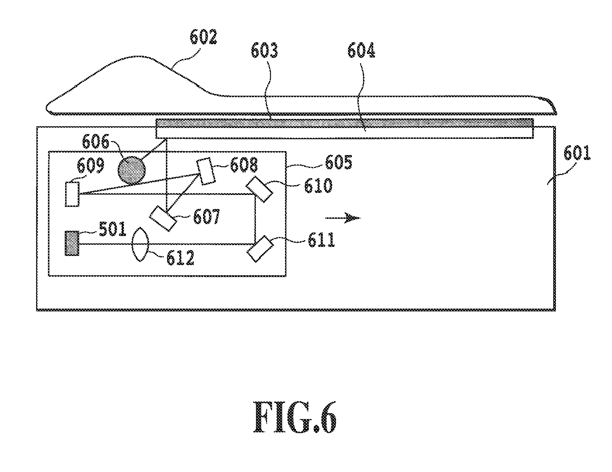

The wording "main scanning direction" herein means a direction perpendicular to a movement direction of a reading unit 605 (refer to Fig. 6) relative to the manuscript when the manuscript placed on a platen is read by the scanner.

A direction of reading the image data corresponding to the direction is referred to, on the sensors also, as the main scanning direction.

Likewise, the wording "sub scanning direction" means a horizontal direction relative to the movement direction of the reading unit 605. A direction of reading the image data corresponding to the direction is referred to, on the sensors also, as the sub scanning direction.

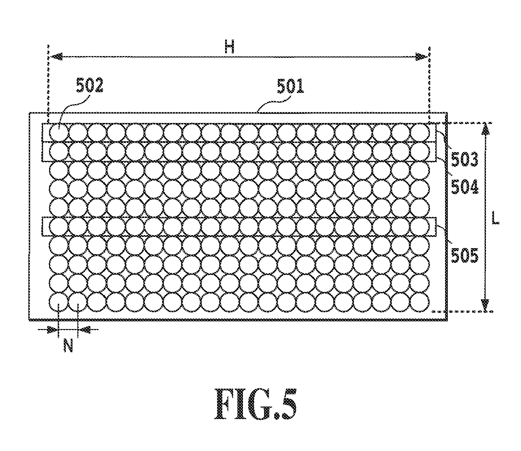

Fig. 5 illustrates the arrangement of the area sensor. In Fig. 5, reference numeral 501 denotes an area sensor device. Reference numeral 502 denotes a pixel sensor in the area sensor 501. The area sensor device 501 is composed of pixel sensors of H pixels in the main scanning direction and L pixels in the sub scanning direction. Each of the pixel sensors may be a color pixel sensor composed of RGB by equally dividing a pixel sensor of this one pixel into four portions. The resolution of the area sensor depends on the distance N between the pixel sensors.

The area sensor used in high-resolution digital camera is composed of an extremely large number of pixels as the number of pixel sensors in the main scanning direction and the number of pixel sensors in the sub scanning direction. For example, a digital camera of 10 millions pixels class includes 3, 800 pixels as the pixel sensors in the main scanning direction and 2,800 pixels as the pixel sensors in the sub scanning direction.

Generally, when area sensor is used in a camera or the like, the area sensor recognizes the input image data as 2-dimensional area and takes the image.

That is, 2-dimensionally disposed pixel sensors are used to take one image. The area sensor device is mounted on the read device so that pixel sensors are disposed with no skew to obtain image data free from distortion in the lateral direction or vertical direction.

Therefore, the area sensor device is disposed so that the taken image is reproduced free from any displacement in an oblique direction.

For example, when an area sensor is mounted in an ordinary camera, the pixel sensors enclosed by black line 503 reads the image data which form the uppermost end portion of a shooting object.

The read image data has no skew in a direction of the line.

Likewise, the pixel sensors enclosed by a black line 504 reads the image data different from the position of the shooting object read by the pixel sensors enclosed by black line 503. That is, the image data read by the pixel sensors enclosed by black line 504 is positioned below than the shooting position read by the pixel sensors enclosed by black line 503 in a vertical direction. The image data read by the pixel sensors enclosed by black line 505 is positioned four pixels below than the shooting position read by the pixel sensors enclosed by black line 503 in a vertical direction.

Thus, when an area sensor of digital camera is used, the image data is taken as a 2-dimensional area. Therefore, each of the pixel sensors constituting the area sensor takes an image of different portion of the shooting object.

On the other hand, the method of utilizing the area sensor in the apparatus of the embodiment is different from that in the digital camera.

The area sensor shown in Fig. 5 is mounted to a mounting reference position of the read device.

In an image processing apparatus which performs ordinary printing, the apparatus takes reflected light of the light, which is irradiated from a light source to a manuscript, into a sensor so that the reflected light has no skew with respect to the sensor.

Therefore, the sensor is mounted at a position where the sensor can take the image with little skew.

For example, the sensor is mounted so that the main scanning direction of the sensor is substantially parallel to the mounting plane of the sensor; and the sub scanning direction thereof is substantially perpendicular to the mounting plane of the sensor.

Little skew that actually exists is corrected and eliminated. This position is the mounting position as the reference.

In order to simplify the description, it is assumed that the pixel sensor includes 20 pixels in the main scanning direction and 10 pixels in the sub scanning direction.

Note that the number of the pixel sensors is given only for describing the purpose and structure of the area sensor according to the embodiment. The number of the pixel sensors is not limited to the number of the illustrated pixel sensors.

Actually, needless to say that the number of the pixel sensors used in a digital camera may be employed.

The reading unit 605 including area sensor 501 mounted on the read device is driven in a direction indicated with an arrow in Fig. 6 to read image data of the manuscript placed on the platen 604.

That is, a read operation is performed by handling the read line sensors 504 and 505 as a group of pixel sensors as same as the above-described line sensor.

The processing of the image data read by the read line sensors 504 and 505 will be described below.

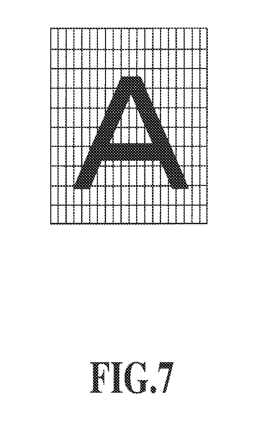

Fig. 7 illustrates an exemplary image data to be read in this description. The grids in Fig. 7 correspond to the resolution of the pixel sensors constituting the read line sensors 504 or 505.

When the reading unit 605 is driven to move in the sub scanning direction under the platen, the image data, which are input into the read line sensors 504 and 505, are sequentially read.

That is, a portion corresponding to the line width, which corresponds to the position of the reading unit 605 in the manuscript image data, is successively read.

The reading process of the manuscript image will be described below.

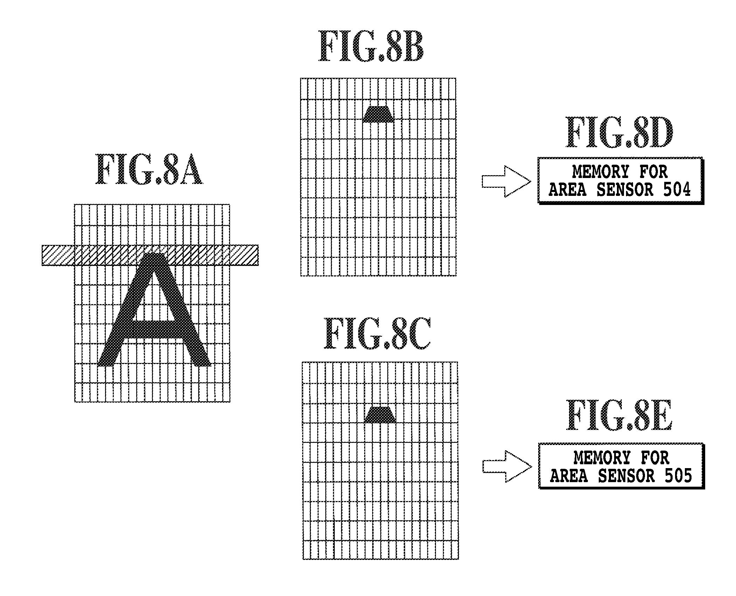

When the reading unit 605 moves in the sub scanning direction under the platen, shadowed portions of the manuscript image illustrated in Figs. 8A, 9A, 10A and 11A are illuminated by the light from the light source.

First, at a point of time, the shadowed portion shown in Fig. 8A is illuminated by the light from the light source. Then, the area sensor detects the light and detects the manuscript image data located in the line width portion which is the portion illuminated by the light.

For example, at this time, the line sensor 504 detects the image data as shown in Fig. 8B. At the same time, the line sensor 505 detects the image data as shown in Fig. 8C.

Since the two line sensors are disposed being interposed by a physical distance therebetween in the sub scanning direction, a displacement of the read position is generated between the two image data.

Each of the manuscript image data read by the respective read line sensors is handled as the different image data, and is separately stored in a storage medium like a memory as shown in Fig. 8D and Fig. 8E.

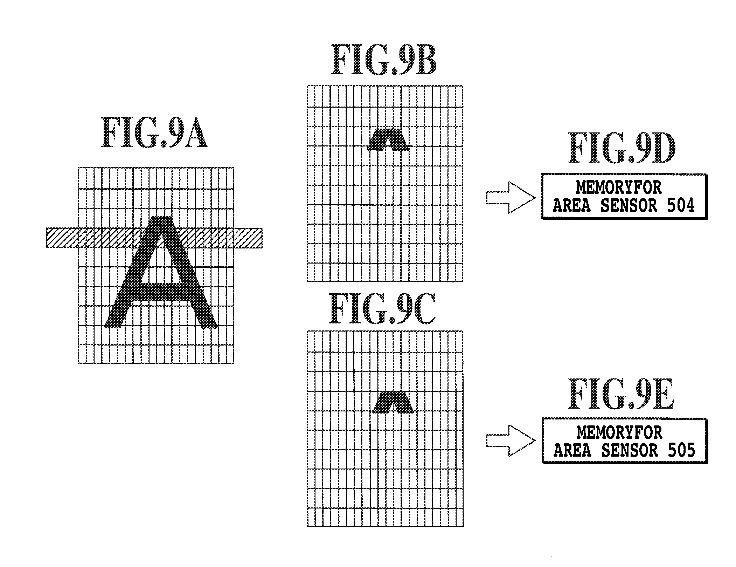

Next, as the reading unit 605 and the light source move, the position of the manuscript image to be detected by the line sensors changes as shown in Fig. 9A. The line sensors 504 detects an image shown in Fig. 9B, and the line sensor 505 detects an image shown in Fig. 9C.

Then, in the storage medium like a memory, image data shown in Fig. 9D and Fig. 9E are stored respectively.

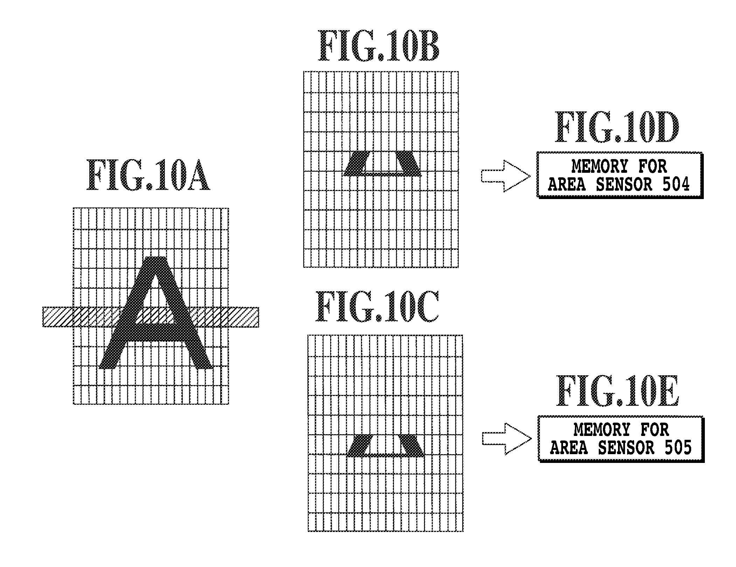

Likewise, when a position shown in Fig. 10A is read, each of the image data shown in Fig. 10B and Fig. 10C is stored in the storage medium like a memory as shown in Fig. 10D and Fig. 10E.

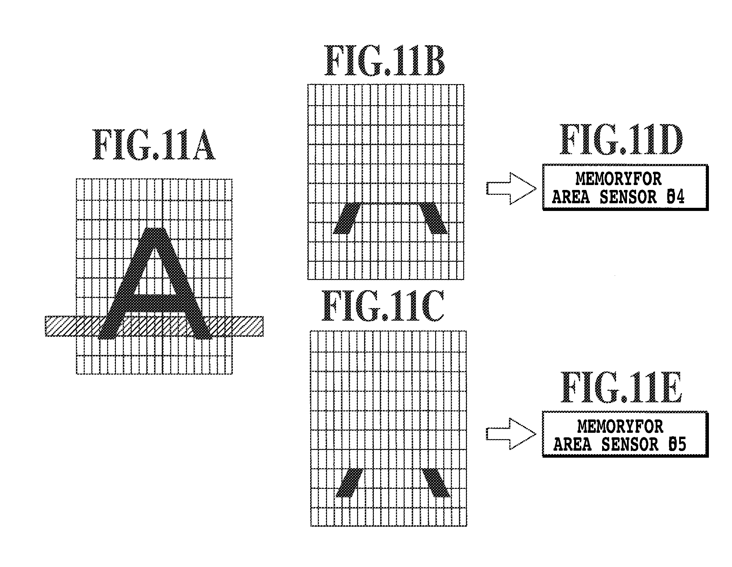

Further, when a position shown in Fig. 11A is read out, each of the image data shown in Fig. 11B and Fig. 11C is stored in the storage medium like a memory as shown in Fig. 11D and Fig. 11E.

Finally, the entire of the manuscript image is illuminated by the light from the light source, and the respective line sensors read the image data at the respective positions.

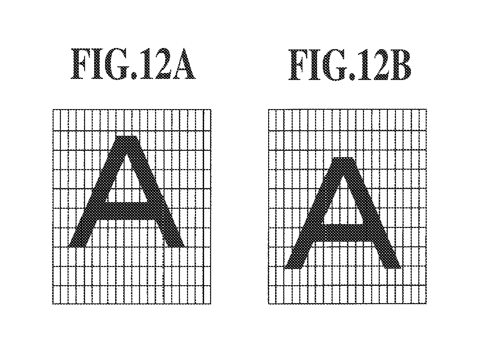

The read image data are sequentially stored in the memory and a plurality of image data including a displacement by one pixel in a sub scanning direction is obtained as shown in Fig. 12A and Fig. 12B.

A plurality of image data equivalent to the number of the line sensors each including a displacement in the sub scanning direction is obtained.

As described above, by disposing the pixel sensors 2-dimensionally and using the sensors as the area sensor for reading the image, a plurality of images can be obtained by one read operation in a state that the phases of the respective images are continuously displaced in the sub scanning direction.

Method of utilizing the area sensor used in the apparatus according to the embodiment is described below.

First, the area sensor shown in Fig. 5 is mounted on the read device in a skewed manner.

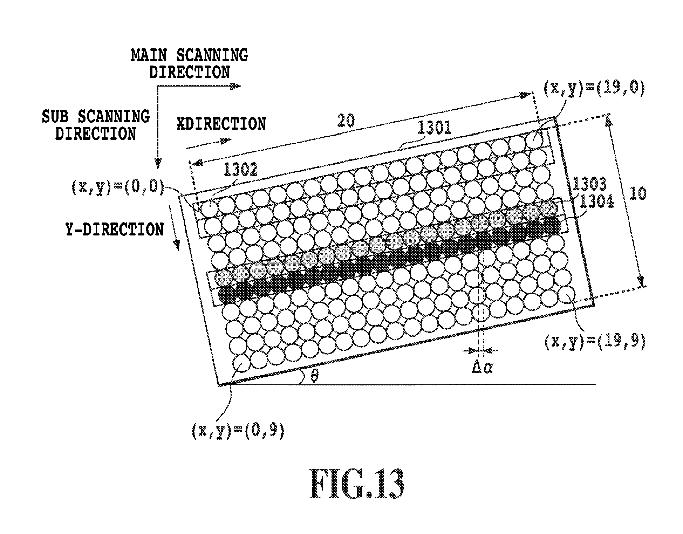

Fig. 13 shows an example of mounting mode of the area sensor according to the embodiment.

Reference numeral 1301 denotes the area sensor device.

Reference numeral 1302 denotes a pixel sensor. In this description, the area sensor device includes pixel sensors of 20 pixels in the main scanning direction and 10 pixels in the sub scanning direction.

The area sensor is mounted at the mounting position as the reference being skewed with respect to the main scanning direction and the sub scanning direction.

That is, the area sensor device is mounted so that the bottom line sensors disposed in the area sensor have an angle θ with respect to the main scanning direction of the sensors as the reference.

The position of the constituting pixel sensors is expressed as below; i.e., with the left upper end portion of the area sensor as the origin, the main scanning direction is defined as the x-direction; and the sub scanning direction is defined as the y-direction.

That is, the coordinate of the left upper end portion is expressed as $(x, y) = (0, 0)$; and the coordinate of the right upper end portion is expressed as $(x, y)=(19, 0)$.

Likewise, the coordinate of the left bottom end portion is expressed as $(x, y)=(0, 9)$; and the coordinate of the right bottom end portion is expressed as $(x, y)=(19, 9)$.

Reference numeral 1303 denotes a group of pixel sensors included in one line and constituting the area sensor 1301. Specifically, the group of pixel sensors 1303 includes 20 pixel sensors in the main scanning direction.

That is, the group of pixel sensors 1303 is composed of pixel sensors having the coordinate position (0, 4), (1, 4), (2, 4), ... (19, 4), respectively.

In the following description, a plurality of pixel sensors included in the group 1303 is referred to as read line sensor 1303.

Likewise, a group 1304 is composed of pixel sensors having the coordinate position (0, 5), (1, 5), (2, 5), ... (19, 5) respectively. In the following description, the group 1304 is referred to as read line sensor 1304.

According to the embodiment, when the reading unit 605 including the area sensor 501, which is mounted on the read apparatus, is driven in the direction of the arrow in Fig. 2, the manuscript image data placed on the platen 604 is read.

That is, the read line sensors 1303 and 1304 as the groups of pixel sensors are handled as the line sensors as described above with reference to Fig. 5, and thereby the read operation is performed.

Then, the processing of the image data read by the read line sensor 1303 and the read line sensor 1304 is described below.

In this description, the image data to be read is shown in Fig. 7.

That is, the manuscript image data in Fig. 7 corresponds to the manuscript image data 603 in Fig. 6.

The grids in the figure correspond to the resolution of the pixel sensors constituting the read line sensors 1303 and 1304.

The manuscript image is read as shown in Figs. 8A to 12B as described above. Since the read line sensors 1303 and 1304 are skewed by an angle of θ, the image data are obtained being skewed by the angle of θ.

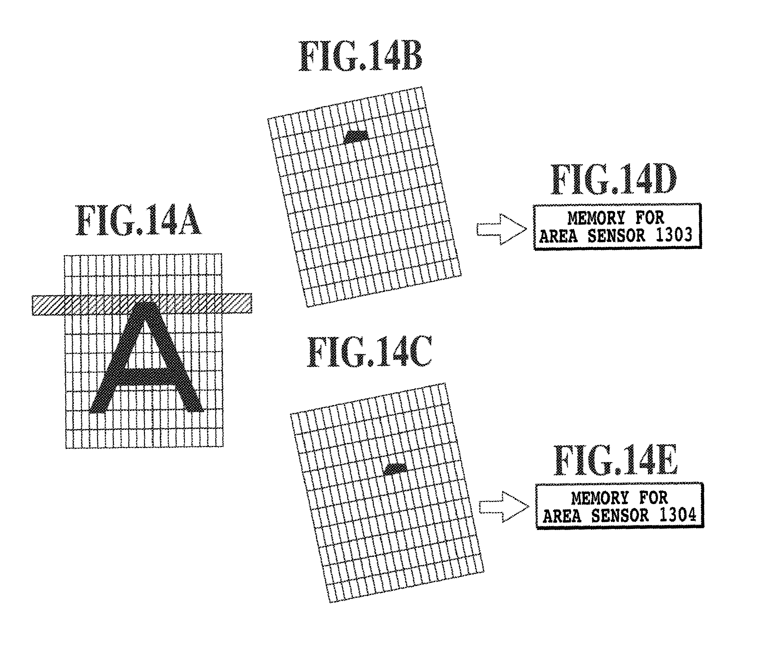

For example, if the area sensor has no skew, basically shadowed portion shown in Fig. 14A should be read. However, since the area sensor is skewed, the line sensors 1303 and 1304 detect the image data as shown in Fig. 14B and Fig. 14C.

These image data are stored in the storage medium like a memory being skewed as shown in Fig. 14D and Fig. 14E.

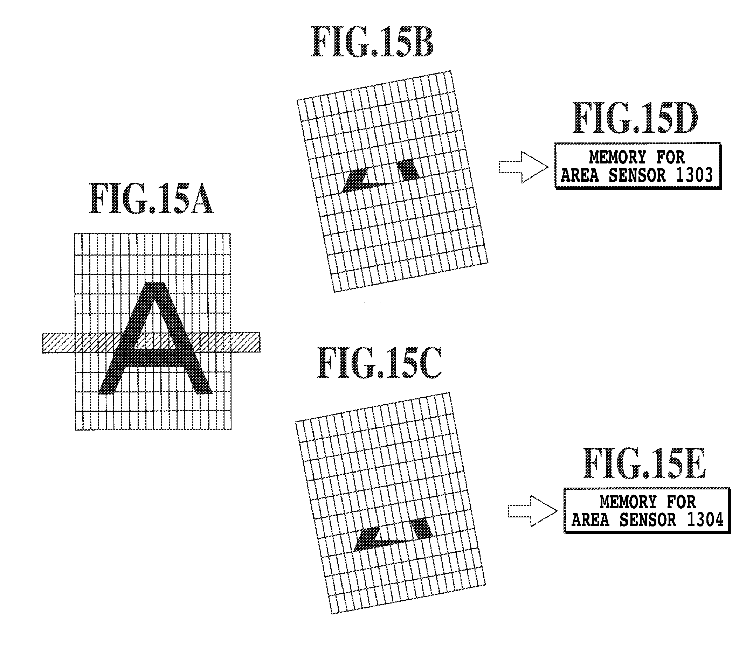

Likewise, when the reading unit 605 and the light source move to read the shadowed portion shown in Fig. 15A, the line sensors 1303 and 1304 detect the image data as shown in Fig. 15B and Fig. 15C.

These image data are stored respectively in the storage medium like the memory as shown in Fig. 15D and Fig. 15E.

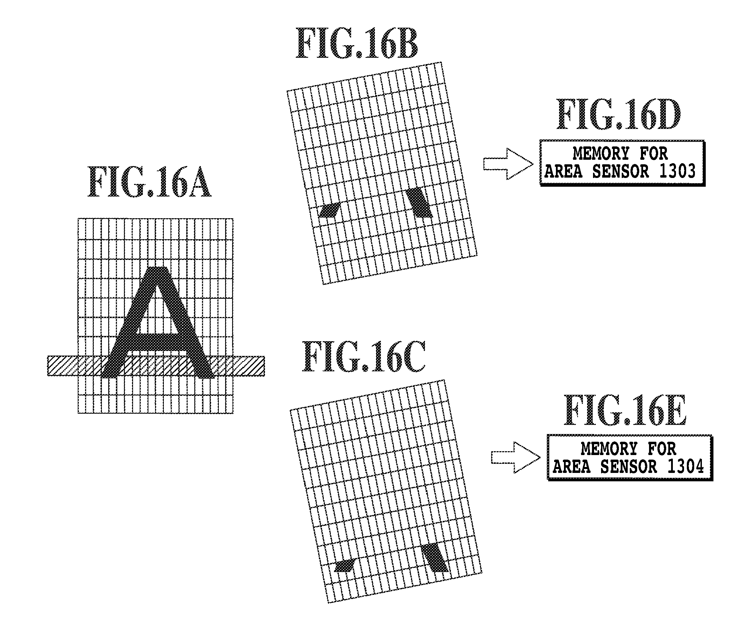

Further, when the reading unit moves in the sub scanning direction and the light source moves, and when the shadowed portion shown in Fig. 16A is read, the line sensors 1303 and 1304 obtain the image data shown in Fig. 16B and Fig. 16C.

Then, these image data are stored respectively in the storage medium like a memory as shown in Fig. 16D and Fig. 16E.

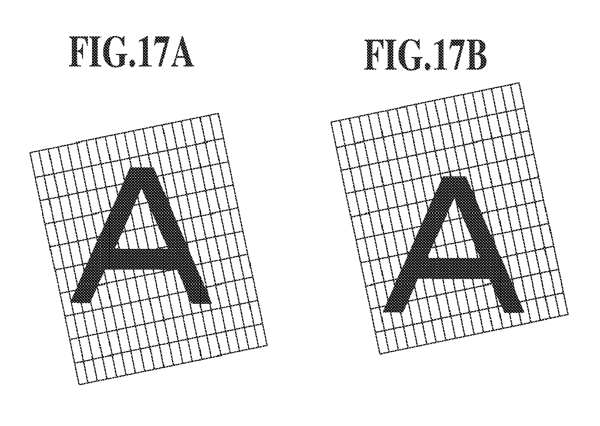

Finally, the image data detected and read by the line sensors 1303 and 1304 are the data as shown in Fig. 17A and Fig. 17B. Both of the data are read as the image data being skewed by an angle of θ.

As shown in Fig. 13, the read line sensor 1303 and the read line sensor 1304 are physically displaced each other by one pixel sensor in the sub scanning direction.

Therefore, there is a phase displacement in the horizontal direction between the pixel sensors constituting the read line sensor 1303 and the pixel sensors constituting the read line sensor 1304.

For example, the positions in y-axial direction of the pixel sensors in the read line sensor 1303 positioned at the coordinate (x, y) = (15, 4) and the pixel sensors in the read line sensor 1304 positioned at the coordinate (x, y)=(15, 5) are displaced by a distance of y=1. The displacement generates a displacement of $\Delta\beta$ in the sub scanning direction.

On the other hand, the positions in the x-axial direction are x=15, exactly identical to each other.

However, viewed in a horizontal direction, which is the main scanning direction before the entire of the area sensor is skewed, due to the skew angle θ, the phase is displaced by a small amount $\Delta\alpha$ smaller than the sub-pixel.

That is, even the pixel sensors located at the same position in the x-axial direction within the read line sensor, due to the skew of the area sensor, a minute phase displacement depending on the skew angle is generated in the horizontal direction as the main scanning direction.

Therefore, the image data read by the read line sensor defined within the area sensor 1301 is the image data including different phase displacement for each of the line sensors having the same resolution.

Specifically, the phases of the read image data in Fig. 17A and the read image data in Fig. 17B are not only displaced by $\Delta\beta$ in the sub scanning direction but also displaced by $\Delta\alpha$ in the main scanning direction.

In the above description, it is assumed that there are two read line sensors (read line sensors 1303 and 1304), but the number thereof is not limited to the above.

A plurality of read line sensors may be provided by increasing pixel sensors constituting the area sensor 1301 in the y-axial direction.

That is, the maximum number of the read line sensors is the number of pixels constituting the area sensor 1301 aligned in the y-axial direction.

The number of the read line sensors is the same as that of the read image data obtained by one read operation.

That is, when 30 lines of the read line sensors are arranged within the area sensor 1301, 30 of read images, which include different phase displacements, can be obtained by one read control.

By inclining the area sensor, image data for plural images, which includes displacement smaller than one pixel in the main scanning direction, can be obtained by one scanning of the manuscript image. The obtained image data is expressed by plural lines neighboring in the sub scanning direction corresponding to the manuscript image.

The super-resolution processing has been described above.

Now, the description returns to the image forming apparatus 10.

The manuscripts are set in a tray 202 on a manuscript feeder 201. When an instruction is given by a user to start the reading through the operation unit 12, the instruction to read the manuscript is given to the scanner unit 13 from the controller 11. Receiving the instruction, the scanner unit 13 feeds the manuscript one by one from the tray 202 on the manuscript feeder 201 and the reading operation of the manuscript is carried out. The reading method of the manuscript may not be an automatic feeding by the manuscript feeder 201. A method, in which a manuscript is placed on a glass (not shown) and an exposing section is moved to scan the manuscript, may be employed.

The printer unit 14 is an image forming device for forming the image data received from the controller 11 on a sheet. The printer unit 14 is provided with a plurality of sheet cassettes 203, 204 and 205 for permitting selection of different size or different direction of the sheet. The sheet cassette contains, for example, papers of A4 and A4R, and is selected by user's instruction or the like. Printed sheet is discharged on a discharge tray 206.

<Detailed description of the controller 11>

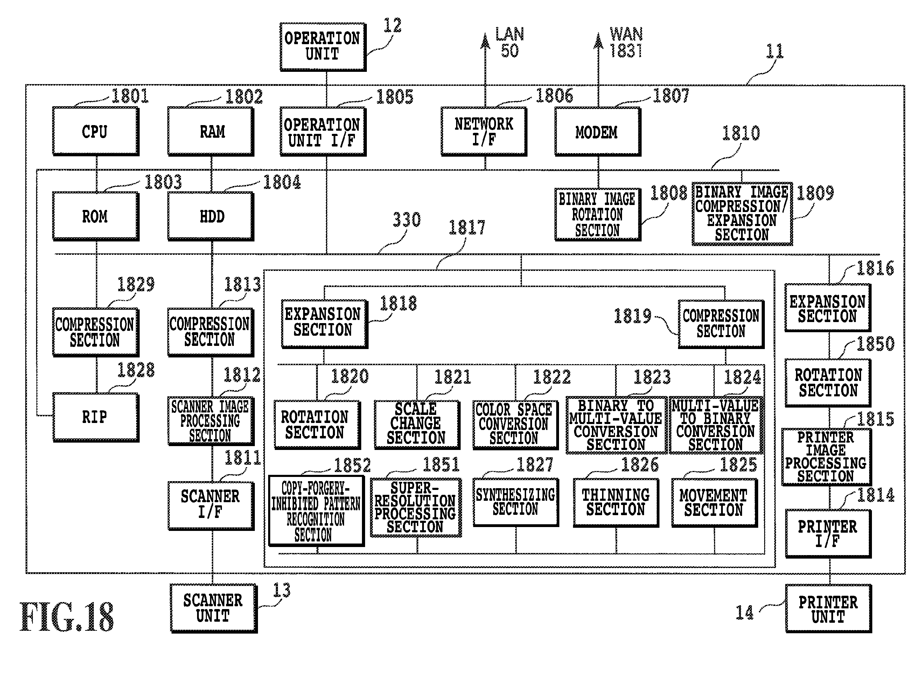

Next, the configuration of the controller 11 is described in detail with reference to Fig. 18. Fig. 18 is a block diagram illustrating in more detail the configuration of the controller 11 on the image forming apparatus 10.

The controller 11 is electrically connected to the scanner unit 13 and the printer unit 14, while being connected to a PC 40 and an external apparatus over LAN 50 and WAN 1831. With this configuration, image data and device information can be input and output.

CPU 1801 controls collectively the access to various devices in connection based on a control program or the like stored in ROM 1803 as well as various processing executed in the controller. RAM 1802 is a system work memory that enables the CPU 1801 to operation as well as a memory for temporarily storing image data.

The RAM 1802 includes a SRAM that holds the stored information even after power off and a DRAM that deletes the stored information when the power is turned off. The ROM 1803 stores a boot program and the like for the system. HDD 1804 is a hard disc drive capable of storing system software and image data.

An operation unit I/F 1805 is the interface unit that connects a system bus 1810 and the operation unit 12. The operation unit I/F 1805 receives the image data for displaying the same on the operation unit 12 through the system bus 1810 and outputs the data to the operation unit 12. Also, the operation unit I/F 1805 outputs the information input through the operation unit 12 to the system bus 1810.

A network I/F 1806 is connected to the LAN 50 and the system bus 1810 to input and output information. A modem 1807 is connected to the WAN 1831 and the system bus 1810 to input and output information. A binary image rotation section 1808 changes the direction of the image data before transmission. A binary image compression/expansion section 1809 converts the resolution of the image data before transmission into a predetermined resolution or resolution conforming to the other party's capacity. For compression and expansion, any method of JBIG, MMR, MR and MH may be employed. An image bus 330 is a transmission path for transmitting and receiving image data, and is composed of a PCI bus or IEEE 1394.

A scanner image processing section 1812 performs correction, processing and edition on image data received from the scanner unit 13 via a scanner I/F 1811. The scanner image processing section 1812 determines whether the received image data is a color manuscript, a monochrome manuscript, a character manuscript or a photo manuscript, and attaches the determination result to the image data. Such attached information is referred to as region data. The process made in the scanner image processing section 1812 will be described later in detail.

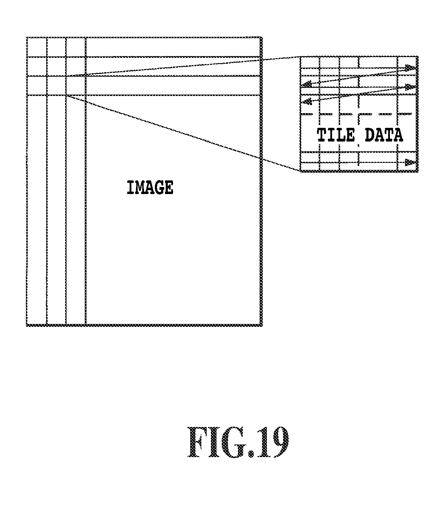

A compression section 1813 receives the image data and divides the image data into blocks of 32x32 pixels. The image data of 32x32 pixels is referred to as tile data. Fig. 19 conceptually illustrates the tile data. An area in a manuscript (paper medium before being read) corresponding to the tile data is referred to as tile image. The tile data is added with mean luminance information in a block of 32x32 pixels and coordinate position on the manuscript of the tile image as header information. Further, the compression section 1813 compresses the image data including a plurality of tile data.

An expansion section 1816 expands the image data including the tile data, and transmits the data to a rotation section 1850. The rotation section 1850 rotates the image if necessary in accordance with the sheet direction or the like. After being subjected to raster expansion, the data is transmitted to a raster printer image processing section 1815. An image conversion section 1817 is also provided with an image rotation module. However, since the image conversion is a process frequently used, handling of the image data by the image conversion section 1817 becomes redundant and causes a reduction of the performance. Therefore, ordinary the image is rotated by using the rotation section 1850. The rotation of the tile data can be carried out by changing the order of transmitting the tiles to the expansion section, or by rotating each of the expanded tiles.

A printer image processing section 1815 receives the image data transmitted from the rotation section 1850, and performs image processing on the image data while referring to the region data attached to the image data. After the image processing, the image data is output to the printer unit 14 via a printer I/F 1814. The process carried out in the printer image processing section 1815 will be described later in detail.

The image conversion section 1817 performs a predetermined conversion process on the image data. The image conversion section 1817 includes the following processing sections.

An expansion section 1818 expands the received image data. A compression section 1819 compresses the received image data. A rotation section 1820 rotates the received image data. A scale change section 1821 performs a resolution changing process (for example, to change from 600 dpi to 200 dpi) on the received image data. A color space conversion section 1822 converts color space of the received image data. The color space conversion section 1822 performs a known background removal processing by using a matrix or a table, or a known LOG conversion process (RGB->CMY) or a known output color correction processing (CMY->CMYK). A binary to multi-value conversion section 1823 converts received binary tone image data into 256-tone image data. Contrarily, a multi-value to binary conversion section 1824 converts the received 256-tone image data into binary tone image data using a technique of error dispersion processing or the like.

A synthesizing section 1827 synthesizes two image data received to generate one image data. When synthesizing two image data, a method, in which mean value of luminance values of the pixels to be synthesized is used as synthesizing luminance value; or a method, in which luminance value of a pixel having a higher luminance level is used as luminance value of the pixel to be synthesized, is employed. Or, a method, in which luminance value of a pixel having a lower luminance level is used as luminance value of the pixel after synthesized, may be employed. Furthermore, a method, in which synthesized luminance value is determined by using a logical OR operation, logical AND operation or logical EXCLUSIVE OR operation of the pixels to be synthesized, may be employed. These synthesizing methods are well-known techniques.

A thinning section 1826 performs resolution change by thinning pixels from the received image data to generate 1/2, 1/4 or 1/8 image data. A movement section 1825 adds a blank portion to received image data or removes blank portion therefrom.

An RIP 1828 receives intermediate data generated based on PDL code data, which is transmitted from the PC 40, to generate bit map data (multi value). The compression section 1819 compresses bit map data generated by the RIP 1828 to generate tile data.

A super-resolution processing section 1851 inputs a plurality of images each having a phase different from each other in sub-pixels to generate a high-resolution image. The super-resolution processing is **characterized in that** the larger number of images results in an image having the higher resolution. For example, an image equivalent to 600 dpi is obtained by using 40 images of 100 dpi; while an image equivalent to 1200 dpi is obtained by using 100 images of 100 dpi. Images 401 to 404 in Fig. 4A to Fig. 4D illustrate an example of images generated by using four image data that are displaced by a distance of 1/2 pixel from each other. By using these images, a high-resolution image that has a pixel density four times of the manuscript image can be obtained as shown in 405 of Fig. 4E.

The plurality of images as mentioned above may be obtained from the scanner 13, the PC 40 connected over the network or the image forming apparatus 20.

The super-resolution processing in which the super-resolution processing section 1851 produces one high-resolution image from a plurality of low-resolution images will be described in detail. An example, in which one high-resolution image is produced from four low-resolution images, is given below.

First of all, the scanner unit reads the manuscript to obtain four low-resolution images.

Then, the image conversion section 1817 corrects the skew of obtained low-resolution images.

On this occasion, the skew angle $\theta$ of the obtained images can be achieved by mounting the area sensor 501 on the reading unit 605 in the assembling process of a complex machine including the area sensor.

The skew angle $\theta$ is held as a value specific to the mounted device in a storage section in the complex machine.

The skew of the image data is corrected by carrying out an affine transformation using the angle information, and then rotating the obtained obliquely skewed image data and compensating the image data by reducing the skew with respect to the scanning direction.

Defining the coordinate before conversion as (X, Y); the coordinate after conversion as (X', Y'); and the rotation angle (according to the embodiment, skew angle of area sensor) as $\theta$, the image data including the skew corrected can be obtained by carrying out the affine transformation processing as shown in equation 1.

$$\left[X',Y',1\right] = \left[X,Y,1\right]\begin{bmatrix} \cos\theta & \sin\theta & 0 \\ -\sin\theta & \cos\theta & 0 \\ 0 & 0 & 1 \end{bmatrix} \qquad \text{equation 1}$$

(X', Y'): Coordinate position after conversion

(X, Y): Coordinate position before conversion

The image data obtained by the above affine transformation is the low-resolution image data the skew of which has been corrected.

The method of correcting the skew is not limited to the affine transformation, but any method which corrects the skew of the image data may be employed.

Then, after completing the super-resolution processing using the plurality of images with the corrected skew, the process is terminated.

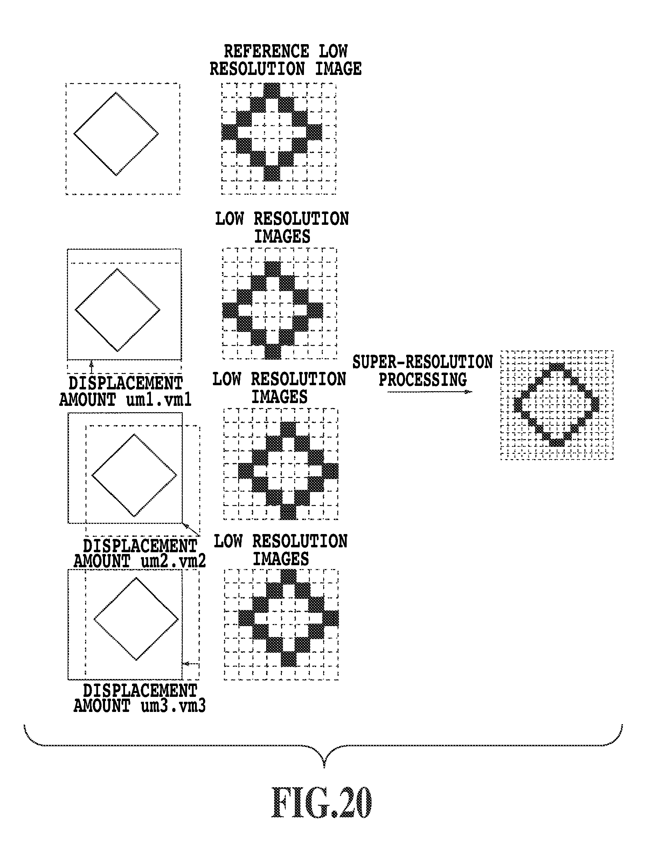

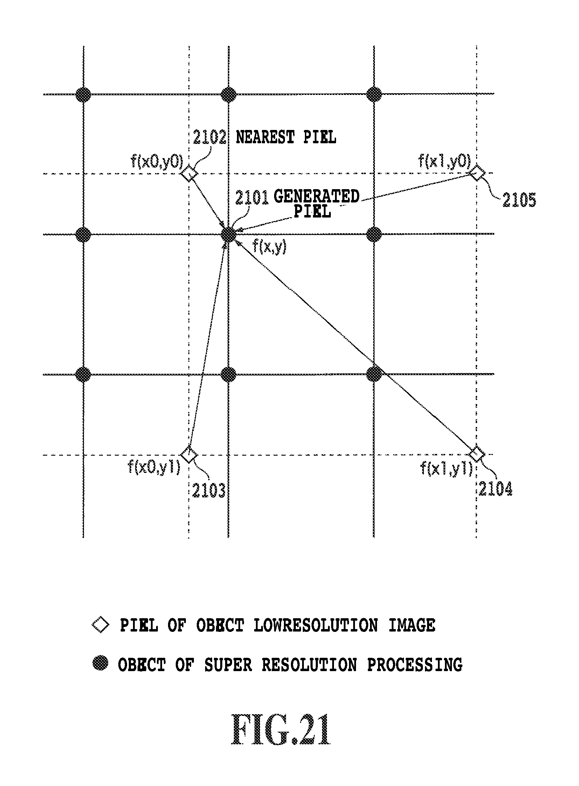

The super-resolution processing carried out here will be described in detail with reference to Figs. 20 and 21.

Fig. 20 illustrates low-resolution images used for the super-resolution processing and an image after the super-resolution processing. Fig. 20 shows manuscripts, a reference low-resolution image F0 and object low-resolution images F1 to F3 obtained by reading the manuscripts with the area sensor. The rectangular block enclosing the manuscript, indicated with a dotted line, represents an area of the reference low-resolution image F0 read by the area sensor; the rectangular block, indicated with a solid line, represents an area of each of the object low-resolution images F1 to F3 read by the area sensor.

Using the displacement between the reference low-resolution image (F0) and each of the object low-resolution images (F1 to F3), the super-resolution processing is carried out. In an actual reading with the area sensor, phase displacement is generated by a distance smaller than one pixel with respect to the main scanning direction and the sub scanning direction. By utilizing the minute displacement, a high-resolution image can be obtained.

In the pixels (referred to "generated pixel") constituting the super-resolution image to be generated, there are pixels, which are not included in any of the reference low-resolution image and the object low-resolution images.

Such pixels are processed with a predetermined interpolation by using pixel data representing pixel values of the pixels around the generated pixels to synthesize and obtain the high-resolution image. Any interpolation process such as bi-linear method, bi-cubic method, nearest neighbor method or the like may be employed for the interpolation processing.

The interpolation processing by using, for example, the bi-linear method is described with reference to Fig. 21. First, a nearest pixel 2102 is picked up that positioned at a nearest distance from the position of the generated pixel 2101 in the reference low-resolution image and the object low-resolution image. Then, four pixels enclosing the position of the generated pixel is selected from the object low-resolution image in Fig. 21 and determined as adjacent pixels 2102 to 2105. Data values of adjacent pixels are added with a predetermined weight and averaged; and data value of the generated pixel is obtained using the following formula.

$$f(x, y) =$$

$$[|x1-x|\{|y1-y|f(x0, y0)+|y-y0|f(x0, y1)\}+|x-x0|\{|y1-y|f(x, y0)+|y-y0|f(x1, y1)\}]/|x1-x0||y1-y0|$$

By repeating the above processing on the positions of the respective generated pixels, for example, a super-resolution image of two times resolution can be obtained as shown in Fig. 20. The resolution is not limited to two times, but any magnitude may be employed. The larger number of data values of the plurality of low-resolution images used for the interpolation processing results in the higher super-resolution image.

The super-resolution processing for producing one high-resolution image from plural low-resolution images has been described above in detail. In addition to the above-described technique, a technique disclosed in PCT international publication No. WO 2004/068862 may be employed for the super-resolution processing carried out by the super-resolution processing section 1851.

The description returns to the image forming apparatus 10.

A copy-forgery-inhibited pattern recognition section 1852 determines whether any copy-forgery-inhibited pattern image data is included in the input image. As described above, the copy-forgery-inhibited pattern image data includes a "latent image portion", which "remains" on the copy; and a "background portion", which "disappears" from the copy. Particularly, the dots of the background portion are generated with a halftone processing using a larger number of lines. Therefore, for example, by carrying out FFT (fast Fourier transformation), a peak having frequency characteristics different from that of ordinary image is obtained. Utilizing these characteristics, it is determined whether or not the copy-forgery-inhibited pattern image data is included in the input image (frequency analysis). Alternatively, since the "latent image portion" and the "background portion" are generated using a particular dither matrix, it may be determined whether or not the copy-forgery-inhibited pattern image data is included in the input image by processing pattern recognition which recognizes dither matrix of input image as particular pattern (pattern matching). Since the FFT and the pattern recognition are well-known techniques, detailed descriptions thereof are omitted.

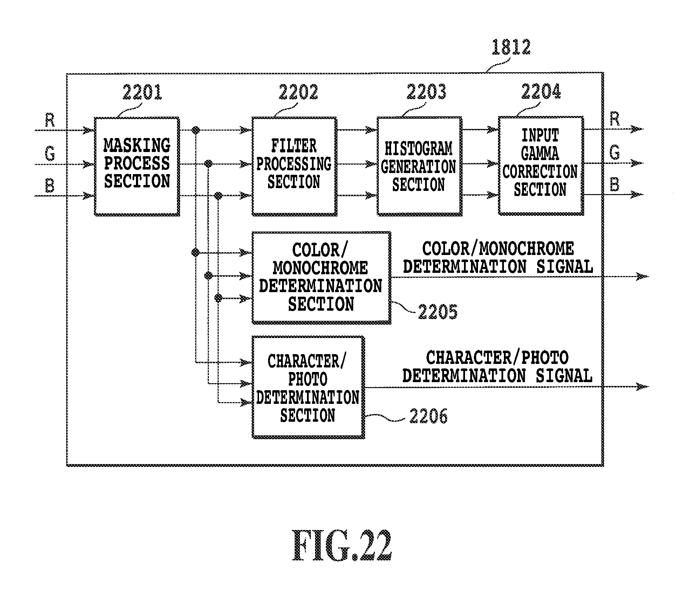

<Detailed description of the scanner image processing section 1812>
Then, the scanner image processing section 1812 will be described in detail with reference to Fig. 22. Fig. 22 illustrates the internal configuration of the scanner image processing section 1812.

The scanner image processing section 1812 receives image data including R, G and B each including 8-bit luminance signal. These luminance signals are converted into standard luminance signals, which do not depend on filter color of CCD, by a masking process section 2201.

The filter processing section 2202 desirably corrects the spatial frequency of the received image data. The processing section performs calculation process on the received image data by using, for example, 7x7 matrix. Generally copying machine or complex machine allows selecting a copy mode like character mode, photo mode or character/photo mode. When a user selects the character mode, the filter processing section 2202 applies a character filter to the entire of the image data. When the photo mode is selected, the photo filter is applied to the entire of the image data. When character/photo mode is selected, filters are selectively switched suitably for each pixel corresponding to character/photo determination signal, which will be described below (a part of region data). That is, it is determined for each pixel whether the photo filter or the character filter should be applied.

In the photo filter, a coefficient is set for smoothing high frequency components only to eliminate roughness of the image. In the character filter a coefficient is set to perform strong edge enhancement to increase sharpness of the characters.

A histogram generation section 2203 performs sampling of luminance data on the pixels included in the received image data. Specifically, the luminance data within a region of the rectangular block, which is enclosed from a start point to an end point each specified in the main scanning direction and the sub scanning direction, is sampled at a constant pitch in the main scanning direction and the sub scanning direction. A histogram data is generated based on the sampling result. The generated histogram data is used for estimating the background level when the background removal process is carried out. An input gamma correction section 2204 converts the data into luminance data having a non-linear characteristic using a table or the like.

A color/monochrome determination section 2205 determines whether the pixel is a chromatic color or an achromatic color on each of the pixels included in the received image data. The determination result is attached to the image data as a color/monochrome determination signal (a part of region data). A character/photo determination section 2206 determines whether the pixel is included in the character or other than character (for example, photo etc) on each of the pixels included in the image data. The determination result is attached to the image data as a character/photo determination signal (a part of region data).

<Detailed description of the printer image processing section 1815>

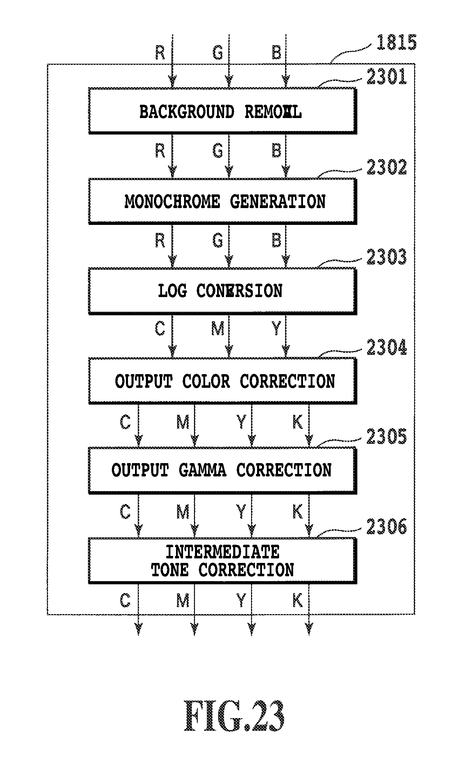

Then, the printer image processing section 1815 will be described in detail with reference to Fig. 23. Fig. 23 illustrates the processing flow carried out in the printer image processing section 1815.

A background removal section 2301 removes background color of the image data using the histogram generated by the scanner image processing section 1812. A monochrome generating section 2302 converts color data into monochrome data, if necessary. A log converting section 2303 changes the luminance density. The log converting section 2303 converts, for example, RGB-input image data into CMY image data.

An output color correcting section 2304 performs output color correction. For example, by using a table or matrix, CMY-input image data is converted into CMYK image data. An output gamma-correcting section 2305 performs correction so that signal value input to the output gamma correcting section 2305 is proportional to output reflected density value. An intermediate tone correcting section 2306 performs a desired intermediate tone correction corresponding to the tone number of the output printer unit. The intermediate tone correcting section 2306 performs binary or 32-value process, for example, on received high tone image data.

Each of the processing sections of the scanner image processing section 1812 and the printer image processing section 1815 is adapted so as to allow the receive image data passing through and being output without being subjected to any processing. Such operation that data is allowed to process through a processing section is occasionally referred to as "pass through processing section".

The controller 11 has been described above. The CPU 1801 interprets the program loaded on the RAM for controlling the controller to execute every operation. The state of the program changes depending on the state of input into the operation unit 12, the LAN 50, the WAN 1831 as well as the state of the scanner 13 and the printer 14.

<Description of copy operation and PDL print operation>

Subsequently, copy operation and PDL print operation are described with reference to Fig. 2, Fig. 18, Fig. 22 and Fig. 23.

The copy operation is described first. The manuscript read by the scanner unit 13 is transmitted as the image data to the scanner image processing section 1812 via the scanner I/F 1811. The scanner image processing section 1812 performs the process shown in Fig. 22 on the image data to generate the region data together with a new image data. Also, the region data is attached to the image data.

Subsequently, the compression section 1813 divides the image data into blocks of 32x32 pixels to generate the tile data. Further, the compression section 1813 compresses the image data including the plurality of tile data. The image data compressed by the compression section 1813 is transmitted to the RAM 1802 and stored therein.

The image data is transmitted to the image conversion section 1817, and subjected to an image processing if necessary. Then, the image data transmitted to the RAM 1802 again and stored therein. After that, the image data stored in the RAM 1802 is transmitted to the expansion section 1816. At this time, when the image rotation is carried out by the rotation section 1850, the tiles are rearranged and transmitted so that the transmission order of the tile data becomes the order after the rotation.

The expansion section 1816 expands the image data. The expanded raster image data is transmitted to the rotation section 1850. The rotation section 1850 rotates the extended tile data. Further, the rotation section 1850 expands the image data including the plurality of expanded tile data into raster. The expanded image data is transmitted to the printer image processing section 1815.

The printer image processing section 1815 edits the image data according to the region data attached to the image data as shown in Fig. 23. After completing the edition of the image data by the printer image processing section 1815, the image data is transmitted to the printer unit 14 via the printer I/F 1814. Finally, the printer unit 14 forms the image on an output sheet.

The editing method carried out in the respective processing sections in the scanner image processing section 1812 and the printer image processing section 1815; that is, in the respective processing sections shown in Fig. 22 and Fig. 23, the editing method is switched by switching the resisters. The resisters are switched in accordance with the region data and information set through the operation unit 12 (by a user). Although it is omitted in the above description, it is needles to say that processes stored in the ROM 1803 and HDD 1804 or the read operation of the image data stored in the ROM 1803 and HDD 1804 may be executed if necessary.

Subsequently, the PDL operation is described. The PDL data transmitted from the PC 40 over the LAN 50 is transmitted to the RAM 1802 via the Network I/F 1806 and stored therein. The intermediate data, which is generated by interpreting the PDL data stored in the RAM 1802, is transmitted to the RIP 1828. The RIP 1828 performs rendering of the intermediate data to generate image data of raster form. The generated image data of raster form is transmitted to the compression section 1829.

The compression section 1829 divides the image data into blocks and then compresses the image data. After being compressed, the image data is transmitted to the RAM 1802. The image data is attached with region data corresponding to the object data included in the PDL data (indicating the character image or the photo image). The image data is, if necessary, transmitted to the image converting section 1817 to be subjected to an image processing, and then, the image data is transmitted to the RAM 1802 again and stored therein. When PDL print is instructed, the image data is transmitted to the printer unit 14 to form the image on an output sheet. Since this operation is the same as the copy operation, the description thereof is omitted.

Setting method of the copy-forgery-inhibited pattern will be described below.

<Description of operation display>

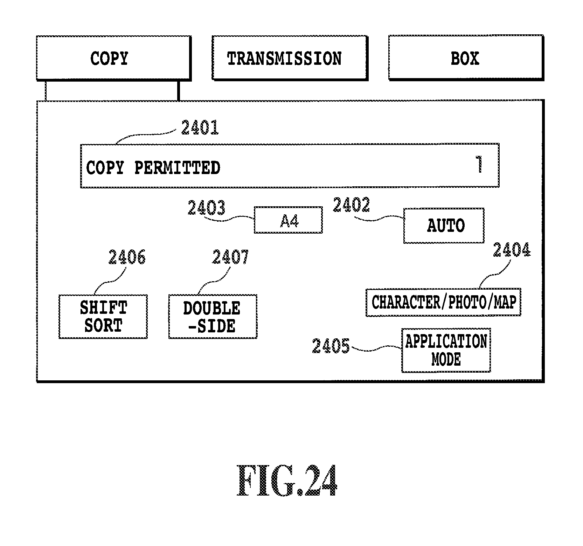

Initial display and operation displays, which are displayed during copy-forgery-inhibited pattern setting, are shown in Figs. 24, 25, 26 and 27.

Fig. 24 illustrates the initial display on the image forming apparatus 10. An area 2401 indicates whether the image forming apparatus 10 is in a state that the copy can be carried out, and set number of the copy is indicated. A manuscript selection tab 2404 is a tab for selecting the manuscript type. When the tab is pressed, three kinds of selection menus; i.e., character, photo, and character/photo modes are popped up.

A finishing tab 2406 is a tab for setting various finishing modes. A double-side setting tab 2407 is a tab for setting information about double-side reading and double-side printing. A read mode tab 2402 is a tab for selecting reading mode of the manuscript. When the tab is pressed, three kinds of selection menus; i.e., COLOR/ BLACK/ AUTO (ACS) are popped up. When COLOR is selected, a color copy is made; when BLACK is selected, a monochrome copy is made. When ACS is selected, copy mode is determined based on the above-described monochrome/color determination signal.

A sheet selection tab 2403 is a tab for selecting a sheet to be used. When the tab is pressed, sheets set in the sheet cassettes 203, 204 and 205 (Fig. 2) and auto sheet selection menu are popped up. When sheets of A4, A4R and A3 are contained in the sheet cassettes, four kinds of selection menus; i.e., auto sheet selection/ A4/ A4R/ A3 are popped up. When the auto sheet selection is selected, a suitable sheet is selected based on the size of the scanned image. In other cases, the selected sheet is used.

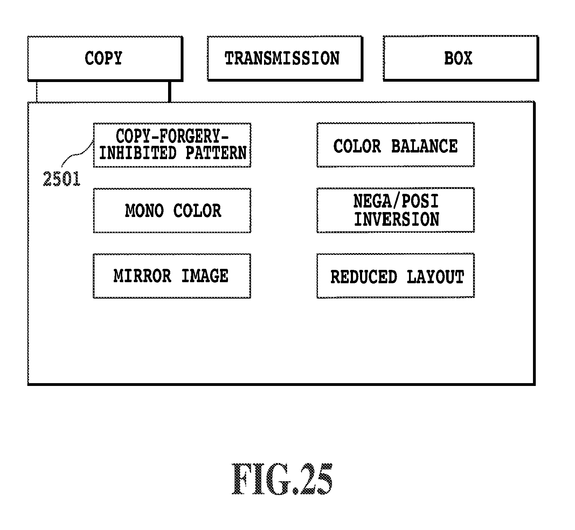

Fig. 25 illustrates a display displayed when an application mode tab 2405 shown in Fig. 24 is pressed. User carriers out setting on this display; i.e., reduced layout, color balance, copy-forgery-inhibited pattern or the like.

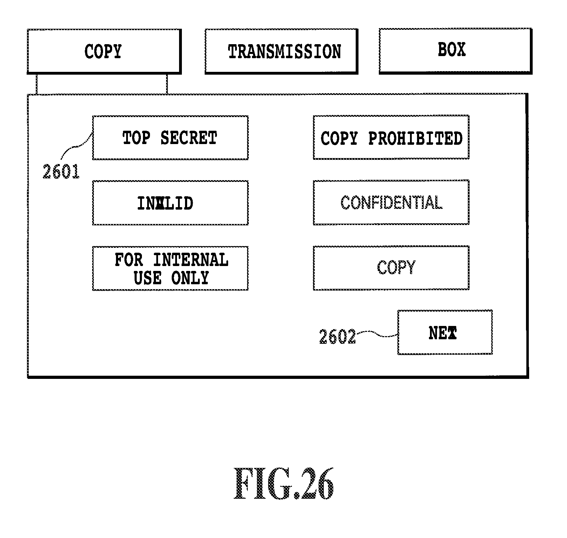

Fig. 26 illustrates a display displayed when a copy-forgery-inhibited pattern tab 2501 shown in Fig. 25 is pressed. User can set character string information as latent image on the display (TOP SECRET, COPY PROHIBITED, INVALID, CONFIDENTIAL, FOR INTERNAL USE ONLY, COPY). To set, for example, "TOP SECRET" as a latent image, after pressing a TOP SECRET tab 2601, a NEXT tab 2602 is pressed.

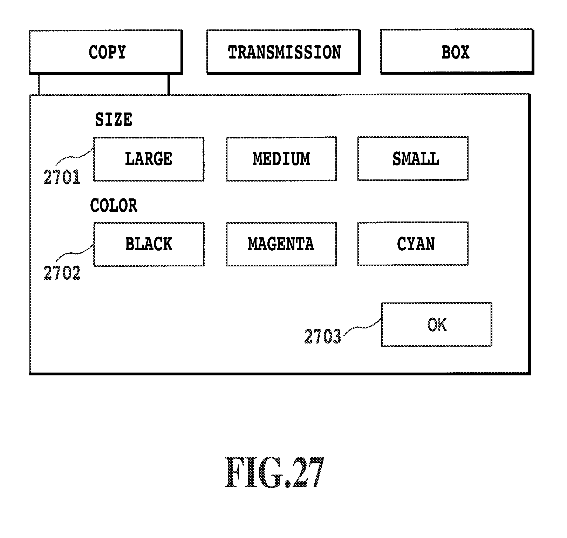

Fig. 27 illustrates a display displayed when the NEXT tab 2602 shown in Fig. 26 is pressed. User can set font size and color of the latent image on the display. For font size, large, medium, small (2701) are available. For color, black, magenta, cyan (2702) are available. After completing the setting of the font and color, when an OK tab 2703 is pressed, the copy-forgery-inhibited pattern setting is completed.

<Copy of ordinary manuscript and manuscript with a copy-forgery-inhibited pattern>

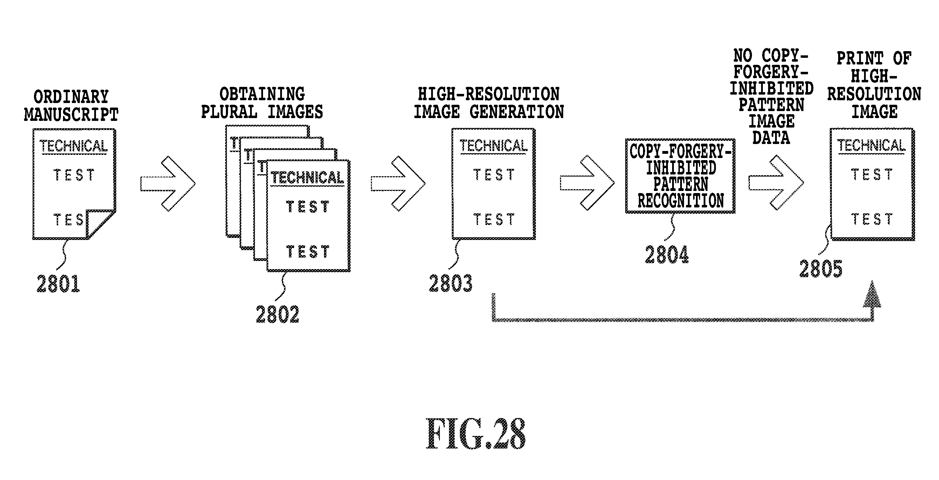

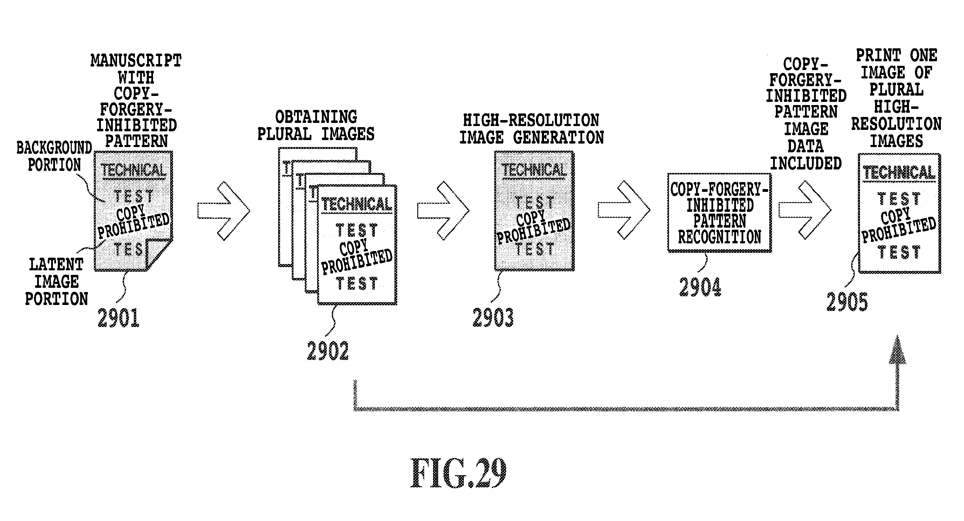

Now, method of visualizing the hidden characters included in the manuscript with copy-forgery-inhibited pattern while maintaining high-resolution image of ordinary manuscript, which is the essential point of the embodiment will be described. The copying process flow of the ordinary manuscript and the manuscript with copy-forgery-inhibited pattern using the copying machine to which the super-resolution technology is introduced will be described first with reference to Fig. 28 and 29.

Fig. 28 illustrates the processing flow of copying an ordinary manuscript.

Reference numeral 2801 denotes an example of an ordinary paper manuscript. As described above, a plurality of images each having a phase different from each other in sub-pixels as shown in 2802 is obtained through the scanner unit 13 of the copying machine. Reference numeral 2803 denotes a result of the super-resolution processing using the plurality of images. The larger number of images used for the super-resolution processing results in the higher resolution image. Character portion of 2803 schematically illustrates that the resolution is higher than that of the character portion 2802.

Next, at 2804, it is determined whether or not the copy-forgery-inhibited pattern image data is included in the high-resolution image of 2803. Since the high-resolution image of 2803 does not include any copy-forgery-inhibited pattern image data, the high-resolution image of 2803 is printed as it is at 2805. Arrows from 2803 to 2805 indicate the output flow based on the recognition result of the image of copy-forgery-inhibited pattern of 2804. Thus, the high-resolution image is obtained from the ordinary paper manuscript.

Fig. 29 illustrates the copying process flow of the manuscript with a copy-forgery-inhibited pattern. Reference numeral 2901 denotes an example of the paper manuscript with copy-forgery-inhibited pattern. A character portion of "COPY PROHIBITED" is the latent image portion, and other part thereof is the background portion. As shown in Fig. 29, the paper manuscript 2901 with copy-forgery-inhibited pattern is read as a plurality of images 2902 from the scanner unit on the copying machine. Reference numeral 2903 denotes a result of the super-resolution processing using the plurality of images. As described above as background art with reference to Fig. 38, when the high-resolution image 2903 is output, desired difference is not generated in the density between the latent image portion of the copy-forgery-inhibited pattern image data and the background portion. Therefore, the embedded character string does not emerge visibly.

Subsequently, at 2904, it is determined whether the high-resolution image 2903 includes the copy-forgery-inhibited pattern image data. Since the high-resolution image 2903 includes the copy-forgery-inhibited pattern image data, it is determined that the copy-forgery-inhibited pattern image data is included at 2904. When it is determined that the copy-forgery-inhibited pattern image data is included at 2904, one of the images obtained at 2902 is printed at 2905. Reference numeral 2905 illustrates a state that characters of "COPY PROHIBITED" emerge visibly. Generally, through the read operation by the scanner unit, the images 2902 are planalized (fuzzy). Therefore, the background portion becomes more dilute due to the image processing by the printer such as background removal or the like while printing at 2905. With this, the latent image portion is reproduced denser than the background portion, and the embedded character strings emerge visibly. The arrows from 2902 to 2905 indicate an image output flow based on the result of the recognition of copy-forgery-inhibited pattern at 2904. Thus, the hidden characters emerge visibly from the paper manuscript with copy-forgery-inhibited pattern.

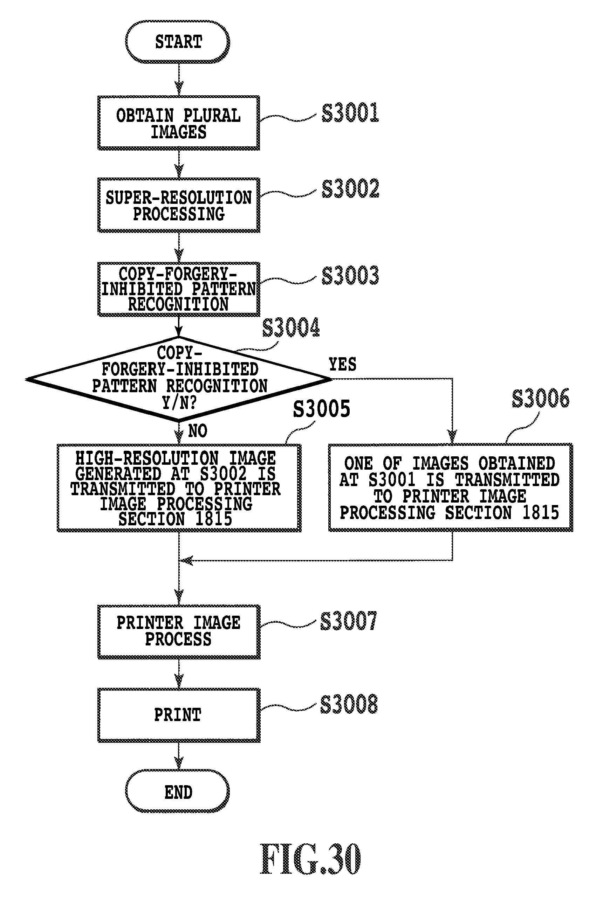

Next, the process of copying an ordinary manuscript and manuscript with copy-forgery-inhibited pattern will be described with reference to flowchart in Fig. 30. The program for executing the flow chart is stored in the ROM 1803 or the HDD 1804 on the controller 11 and executed by the CPU 1801 shown in Fig. 18.

First of all, a plurality of images, the phase of which is different from each other in sub-pixels, are obtained at step S3001. As described above, the plurality of images may be obtained from the scanner unit 13 shown in Fig. 18; or from the PC 40 or the image forming apparatus 20 connected over a network shown in Fig. 1. The obtained plurality of images is stored in the HDD 1804 or the RAM 1802.

At step S3002, the super-resolution processing is carried out by the super-resolution processing section 1851 shown in Fig. 18 using the plurality of images obtained at step S3001. The image after the super-resolution processing is stored in the HDD 1804 or RAM 1802.

Subsequently, at step S3003, the copy-forgery-inhibited pattern recognition section 1852 shown in Fig. 18 carries out the recognition of copy-forgery-inhibited pattern on the high-resolution image generated by the super-resolution processing at step S3002.

When it is determined that no copy-forgery-inhibited pattern image data is included at step S3004, the high-resolution image generated at step S3002 is transmitted to the printer image processing section 1815 at step S3005.

When it is determined that the copy-forgery-inhibited pattern image data is included at step S3004, one of the images obtained at step S3001 is transmitted to the printer image processing section 1815 shown in Fig. 18 at step S3006.

At step S3007, the printer image processing section 1815 shown in Fig. 18 carries out the printer image processing as described in Fig. 23.

At step S3008, the printer unit 14 shown in Fig. 18 outputs the print.

As described above, the hidden characters included in the manuscript with copy-forgery-inhibited pattern can appear while maintaining the high-resolution image of the ordinary manuscript.

[Embodiment 2]

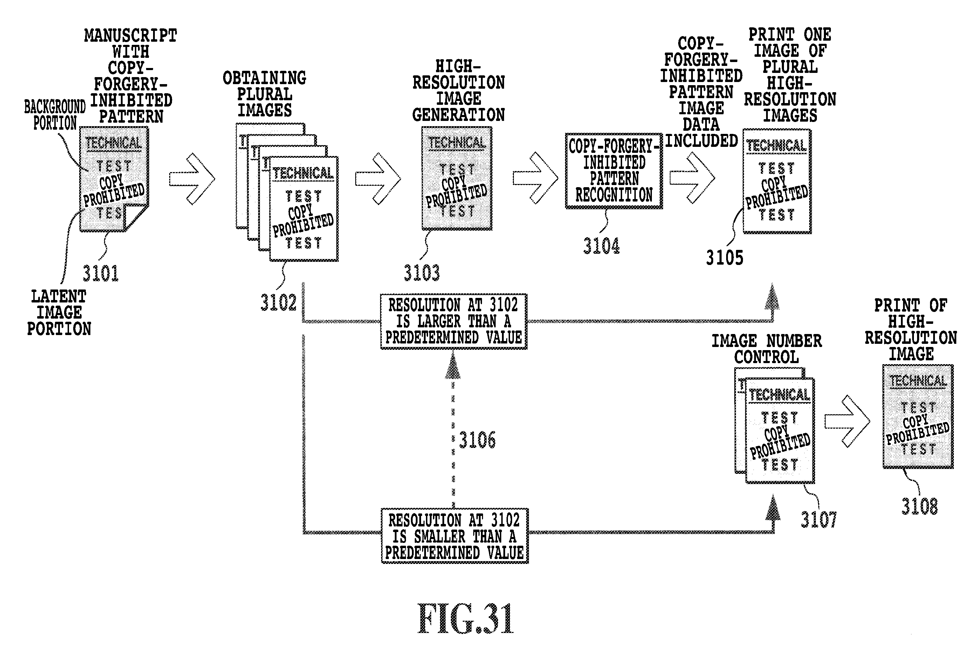

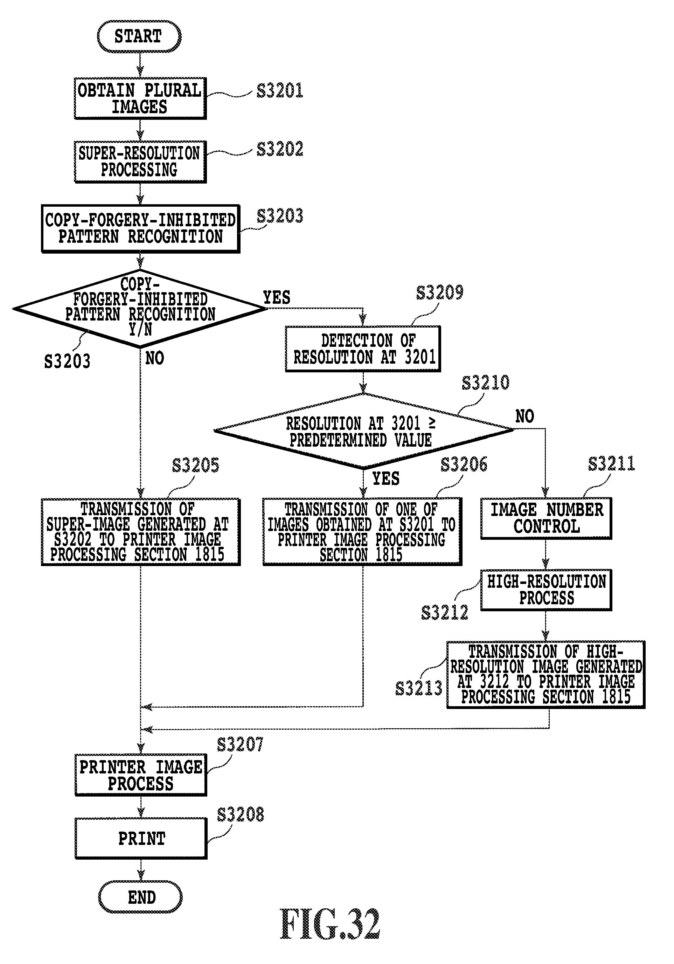

In the above embodiment 1, the method has been described, in which the hidden character included in the manuscript with copy-forgery-inhibited pattern appears while holding the high-resolution image of the ordinary manuscript. The manuscript with copy-forgery-inhibited pattern here is output as an image, which is not subjected to the super-resolution processing. Therefore, there is a problem that the image quality is inferior to that of the ordinary manuscript. Embodiment 2 describes a method with reference to Fig. 31 and 32, in which the image quality is increased with the hidden characters appeared on the manuscript with copy-forgery-inhibited pattern. Descriptions on the same processes as the embodiment 1 are omitted.

Fig. 31 illustrates the processing flow to copy the manuscript with copy-forgery-inhibited pattern.

The process from 3101 to 3104 is identical to the process, which has been described with reference to 2101 to 2104 in Fig. 29. Therefore, the description thereof is omitted.

When it is determined that the copy-forgery-inhibited pattern image data is included at 3104, at 3102, the resolution of one of the images obtained at 3102 is detected at 3106.

At 3106, when the resolution is greater than a predetermined value, one of the images obtained at 3102 is printed as shown in 3105. At 3105, the image, which is not subjected to the super-resolution processing, is output. Therefore, the image quality is inferior to the image quality of the ordinary manuscript subjected to the super-resolution processing. However, by suitably setting the predetermined value of the resolution, the image quality having satisfactory resolution for user can be obtained.

At 3106, when the resolution is smaller than the predetermined value, the super-resolution processing is controlled to carry out using the number of images smaller than the number of the images obtained at 3102 as shown in 3107. At 3108, a high-resolution image generated at 3107 is printed. When the number of images used for the super-resolution processing is reduced, compared to the case where full number of pictures is used, the resolution is lowered. As a result, the background portion becomes dilute. Therefore, the latent image portion after the super-resolution processing is reproduced to be denser than the background portion. Accordingly, embedded character string etc emerges visibly. In other words, the super-resolution processing is carried out using the images obtained at 3102, the number of which is increased up to an extent that the latent image portion is reproduced denser than the background portion.

According to the embodiment 2, it has been described that, when the resolution is larger than the predetermined value at 3106, one of the images obtained at 3102 is printed as shown in 3105. However, the following method may be employed. That is, the super-resolution processing may be carried out using the images obtained at 3102 without depending on the resolution condition, the number of which is increased until the latent image portion is reproduced denser than the background portion.

The arrows from 3102 to 3105 and from 3102 to 3107 indicate the flow of the image to be output based on the result of recognition of copy-forgery-inhibited pattern carried out at 3104.

The process to copy the manuscript with copy-forgery-inhibited pattern will be described with reference to the flowchart shown in Fig. 32. The program that executes the flow chart is stored in the ROM 1803 or HDD 1804 in the controller 11 in Fig. 18, and is executed by the CPU 1801.

Since steps S3201 to 3205 are the identical to the process, which have been described in step S3001 to 3005 in Fig. 30, the description thereof is omitted. At step S3204, when it is determined that the copy-forgery-inhibited pattern image data is included, at step S3209, the resolution of one of the images obtained at step S3201 is detected.

At step S3210, the resolution at step S3201, which is detected at step S3209, is compared to a predetermined value. That is, it is determined whether the resolution at step S3201 is greater than the predetermined resolution, or smaller than the resolution (resolution determination).

At step S3210, when the resolution at S3201 is greater than the predetermined value, one of the images obtained at step S3201 is transmitted to the printer image processing section 1815 shown in Fig. 18. When the resolution at step S3201 is smaller than the predetermined value at step S3210, at step S3211, the number of the images is controlled to be smaller than the number of the images obtained at step S3201. The number of the images is controlled to the maximum number that limits the diluteness of the background portion.

At step S3212, the super-resolution processing section 1851 shown in Fig. 18 performs the super-resolution processing using the plurality of images the number of which is controlled at step S3211.

At step S3213, the high-resolution image (second high-resolution image) generated at step S3212 is transmitted to the printer image processing section 1815 shown in Fig. 18.

Subsequently, at step S3207, the printer image processing section 1815 shown in Fig. 18 performs the printer image processing as described above with reference to Fig. 23.

At step S3208, the printer unit 14 shown in Fig. 18 outputs the print.

As described above, the image quality can be increased while the hidden characters keep appearing on the manuscript with copy-forgery-inhibited pattern.

[Embodiment 3]

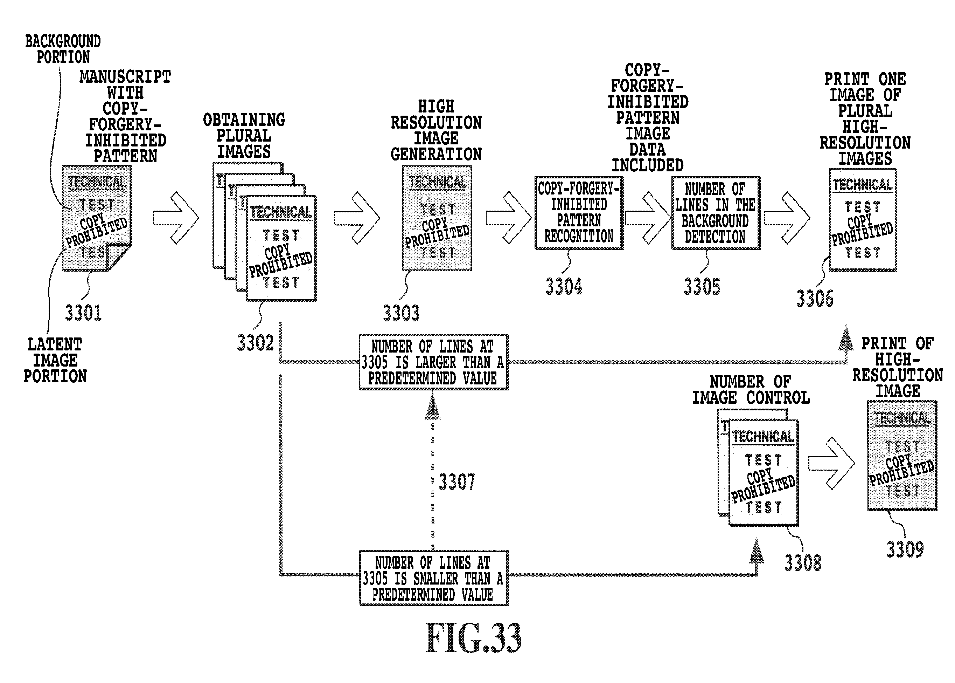

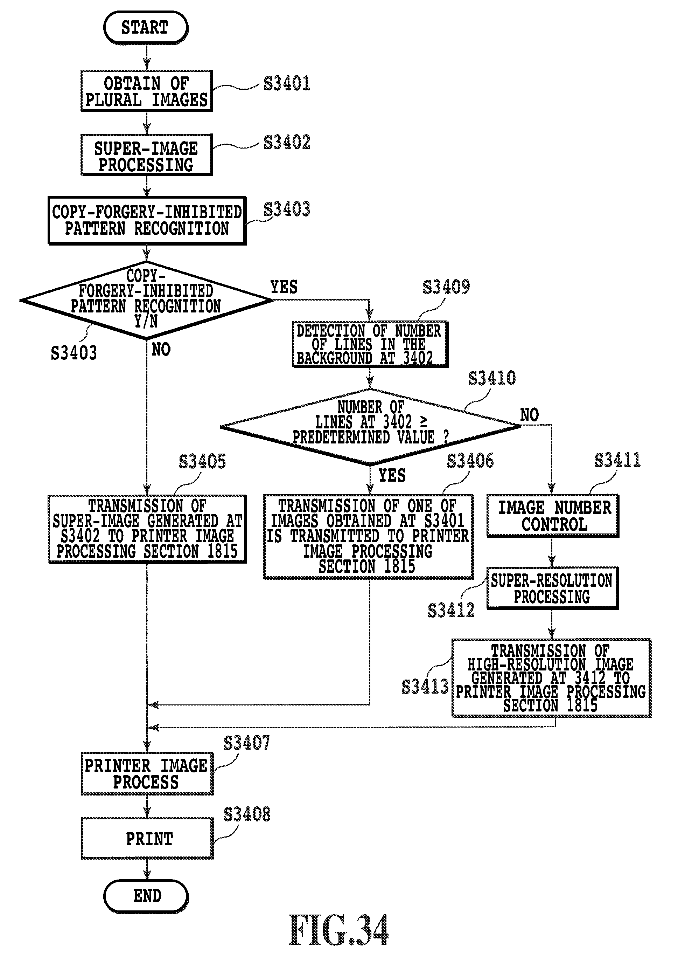

Embodiments 1 and 2 have described the case where the background portion in the manuscript with copy-forgery-inhibited pattern has a constant number of lines. However, in the case of a manuscript with copy-forgery-inhibited pattern, which has different number of lines in the background portion, there may be a case that the background portion does not become more dilute. In an embodiment 3, the following method is described with reference to Fig. 33, 34. That is, even when the manuscript with copy-forgery-inhibited pattern having different number of lines in the background portion, the hidden characters in the manuscript with copy-forgery-inhibited pattern can appear while holding the high-resolution image as well as the ordinary manuscript.

As an example, the following case will be described. That is, when the number of lines in the background portion is A, the background portion becomes more dilute; but when the number of lines in the background portion is B, the background portion does not become more dilute. Here, it is assumed that number A of lines is larger than a predetermined value; and number B of lines is smaller than the predetermined value. For the same processes as those of the above-described embodiment 1, diagrams and descriptions are omitted.

Fig. 33 illustrates the processing flow to copy the manuscript with copy-forgery-inhibited pattern.

Since the process from 3301 to 3304 is identical to the process of the above-described 2901 to 2904 in Fig. 29, the descriptions thereof are omitted.

When it is determined that a copy-forgery-inhibited pattern image data is included at 3304, the number of lines in the background portion is detected at 3305. As described above, when FFT (Fast Fourier Transformation) is carried out on the manuscript with copy-forgery-inhibited pattern, a peak, which has frequency characteristics different from those of an ordinary image, is obtained. Also, when the number of lines in the above-described background portion is A or B, a peak having different frequency characteristics is obtained.

At 3307, when the number of lines detected at 3305 is larger than the predetermined value, one of the images obtained at 3302 is printed as shown in 3306. When the number of lines in the background portion is A as described above, since the number of lines is larger than the predetermined value, the background portion becomes more dilute when printed at 3306. When the number of lines detected at 3305 is smaller than the predetermined value, the super-resolution processing is carried out by using images smaller than images obtained at 3302 as shown in 3308.

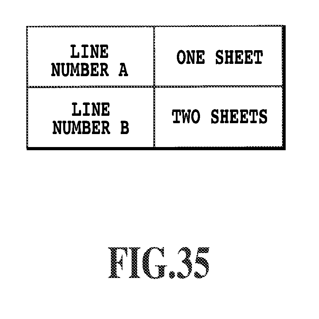

At 3309, the high-resolution image generated at 3308 is printed. Here, when the number is controlled at 3308, a relation table, which defines, as shown in Fig. 35, the kind of lines and the maximum number that limits the diluteness of the background portion is referred. By referring the relation table, when the line number is controlled at 3308, and the super-resolution processing is carried out and printed at 3309, the background portion can be controlled to be more dilute. Arrows from 3302 to 3306 and from 3302 to 3308 indicate the flow of the image to be output based on the detection result of the line number in the background portion at 3305.

The process to copy the manuscript with copy-forgery-inhibited pattern will be described with reference to the flowchart shown in Fig. 34.

The program for executing the above-described flow chart is stored in the ROM 1803 or HDD 1804 on the controller 11 shown in Fig. 18, and is executed by the CPU 1801.

Since the process from step S3401 to S3405 is the same as the step from S3001 to S3005 in Fig. 30, the descriptions thereof are omitted.

When it is determined that the copy-forgery-inhibited pattern image data is included at step S3404, on the high-resolution image generated by the super-resolution processing at the step S3402, the number of lines in the background portion is detected at step S3409.

At step S3410, the number of lines in the background portion detected at step S3409 is compared with the predetermined value. When the number of lines in the background portion is larger than the predetermined value, at step S3406, one of the images obtained at step S3401 is transmitted to the printer image processing section 1815 in Fig. 18. When the number of lines in the background portion is smaller than the predetermined value at step S3410, at step S3411, the number of the images is controlled to be smaller than the number of the images obtained at step S3401. At this time, the number is controlled while referring to the relation table, which defines the kind of lines and the maximum limit number that the background portion becomes more dilute.

Subsequently, at step S3412, the super-resolution processing section 1851 shown in Fig. 18 performs the super-resolution processing using the plurality of images, which has been subjected to the number control at step S3411.

At step S3413, the high-resolution image generated at step S3412 (second high-resolution image) is transmitted to the printer image processing section 1815 shown in Fig. 18.

Subsequently, at step S3407, the printer image processing section 1815 shown in Fig. 18 performs the print image processing as describe with reference to Fig. 23.

At step S3408, the printer unit 14 shown in Fig. 18 outputs the print.

As described above, even when the manuscript with copy-forgery-inhibited pattern having different number of lines in the background portion, the hidden characters in the manuscript with copy-forgery-inhibited pattern can appear while holding the high-resolution image of the ordinary manuscript.

[Embodiment 4]

Embodiments 1 to 3 describe the following cases. That is, after obtaining a plurality of images from the scanner unit on the copying machine, it is determined whether the resultant image obtained by the super-resolution processing using the obtained all images includes the copy-forgery-inhibited pattern image data. However, it takes a considerably long time for the processing to detect the copy-forgery-inhibited pattern image data after the super-resolution processing is carried out using all of the obtained images. Therefore, the following method may be employed. That is, the super-resolution processing is carrying out while increasing the obtained plurality of images one by one to detect the copy-forgery-inhibited pattern image data.

For example, the super-resolution processing is carried out first using two images in the obtained plurality of images (example, four images). It is determined whether or not the copy-forgery-inhibited pattern image data is included in the resultant images. When it is determined that no copy-forgery-inhibited pattern image data is included, the super-resolution processing is carried out using three images including the previous two images. Then, it is determined whether or not the copy-forgery-inhibited pattern image data is included on the resultant images. When the copy-forgery-inhibited pattern image data is detected, the super-resolution processing is terminated. Therefore, it is not necessary to carry out the super-resolution processing using four images.

As described above, by carrying out the super-resolution processing while increasing the number of the images from the obtained plurality of images, the copy-forgery-inhibited pattern image data can be detected in a shorter time. This method may be used in combination with a method in which the image is divided into predetermined blocks (M pixels x N pixels: M and N are integers). In place of the super-resolution processing using the all of the plurality of images (entire image in the respective pages), by carrying out the super-resolution processing by using the blocks located at the same position in the plurality of images, it is possible to determine whether or not the copy-forgery-inhibited pattern image data is included in resultant image after the super-resolution processing. With this method, it is not necessary to use all of the images for the super-resolution processing. Therefore, copy-forgery-inhibited pattern image data can be detected in a shorter time.

[Embodiment 5]

The invention may be applied to a system including a plurality of apparatuses (for example, a host computer, an interface device, a reader, a printer and the like), or an apparatus composed of a single device (for example, a copying machine, facsimile or the like).

The present invention can be also achieved by the following manner. That is, a computer (or CPU, MPU) on the system or apparatus reads a program code from a recording medium which records program codes of software that realizes the above-described functions of the embodiments. In this case, the program code itself, which is read from the computer-readable recording medium, realizes novel functions of the invention, and the computer-readable storage medium storing the program code is included in the invention. As the storage medium for supplying the program code, for example, a floppy (registered trademark) disc, a hard disc, an optical disc, a magnetic optical disc, a DVD-ROM, a DVD-R, a CD-ROM, a CD-R, a magnetic tape and non-volatile memory card are available.

Further, the invention is not limited to the above, in which the functions of the embodiment are realized by executing the program code read by the computer. Needless to say that the invention includes the case where an OS or the like working on the computer performs all or a part of the actual process based on the instructions of the program code, and the above-described functions of the embodiments are realized by the process thereof. Furthermore, an extension board inserted into the computer or an extension unit connected to the computer may realize the program code, which is read from the recording medium. In this case, the program codes read from the storage medium are written in a memory equipped in the extension board or extension unit. After that, a CPU or the like provided to the extension board or extension unit may performs a part or all of the actual process based on the instructions of the program codes, thereby the above-described functions of the embodiments is realized.

While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions.

**Claims**

1. An image processing apparatus (10), comprising:

   means (1806, 1811) configured to obtain a plurality of low-resolution images;
   a super-resolution processing means (1851) configured to generate a high-resolution image using the plurality of low-resolution images;
   a copy-forgery-inhibited pattern detection means (1852) configured to detect a pattern of a copy-forgery-inhibited pattern using the high-resolution image; and
   a control means (11) configured to switch between the high-resolution image and the low-resolution image based on the detection result by the copy-forgery-inhibited pattern detecting means to output an image.

2. The image processing apparatus according to claim 1, wherein, the control means outputs the high-resolution image generated by the super-resolution processing means when no copy-forgery-inhibited pattern is detected as a detection result of the copy-forgery-inhibited pattern detection means, and outputs the low-resolution image when a copy-forgery-inhibited pattern is detected.

**3.** The image processing apparatus according to claim 1, wherein,
the control means further includes a resolution determination means that determines the resolution of the low-resolution image when a copy-forgery-inhibited pattern is detected as a detection result of the copy-forgery-inhibited pattern detection means, and wherein:

when the low-resolution image has the resolution not lower than a predetermined resolution, the control means outputs the low-resolution image; and
when the low-resolution image has the resolution lower than the predetermined resolution, the control means performs an image-number control by an image-number control means controlling the image number to a maximum image number that limits diluteness of a background portion among the plurality of low-resolution images, to generate and output a second high-resolution image.

**4.** The image processing apparatus according to claim 1, wherein,
the control means further includes a line number detection means that detects the number of lines in a background portion when a copy-forgery-inhibited pattern is detected as a detection result of the copy-forgery-inhibited pattern detection means, and wherein:

when the number of lines is not less than a predetermined value, the control means outputs the low-resolution image; and
when the number of lines is less than the predetermined value, the control means performs an image-number control with reference to a relation table that defines a kind of the line number and a maximum image number that limits diluteness of a background portion, to generate and output a second high-resolution image.

**5.** The image processing apparatus according to any one of claims 1 to 4, wherein
the super-resolution processing means performs a super-resolution processing while sequentially increasing the number of the low-resolution images,
the copy-forgery-inhibited pattern detection means detects the copy-forgery-inhibited pattern using a result of the super-resolution processing, and terminates the super-resolution processing at a time point when the copy-forgery-inhibited pattern is detected.

**6.** The image processing apparatus according to any one of claims 1 to 5, wherein the copy-forgery-inhibited pattern detection means detects the pattern of the copy-forgery-inhibited pattern using a frequency characteristic of the high-resolution image.

**7.** The image processing apparatus according to any one of claims 1 to 5, wherein the copy-forgery-inhibited pattern detection means detects the pattern of the copy-forgery-inhibited pattern using a pattern of dither matrix of the high-resolution image.

**8.** An image processing method, comprising:

a step (S3001) of obtaining a plurality of low-resolution images ;
a super-resolution processing step (S3002) of generating a high-resolution image using the plurality of low-resolution images;
a copy-forgery-inhibited pattern detection step (S3003) of detecting a pattern of a copy-forgery-inhibited pattern using the high-resolution image; and
a control step (S3004) of switching between the high-resolution image and the low-resolution image based on the result of the copy-forgery-inhibited pattern detection step to output an image.

**9.** The image processing method according to claim 8, wherein the control step outputs the high-resolution image generated by the super-resolution processing step when no copy-forgery-inhibited pattern is detected as a result of the copy-forgery-inhibited pattern detection step, and outputs the low-resolution image when a copy-forgery-inhibited pattern is detected.

**10.** A computer-readable recording medium containing a program to make a computer execute an image processing method in an image processing apparatus, the method comprising:

a step (S3001) of obtaining a plurality of low-resolution images;
a super-resolution processing step (S3002) of generating a high-resolution image using the plurality of low-resolution images;

a copy-forgery-inhibited pattern detection step (S3003) of detecting a pattern of a copy-forgery-inhibited pattern using the high-resolution image; and

a control step of switching between the high-resolution image and the low-resolution image based on the result of the copy-forgery-inhibited pattern detection step to output an image.

11. A control program, recordable into a computer-readable recording medium, making a computer execute an image processing method in an image processing apparatus, the program making the computer executing following steps, the steps comprising:

a step (S3001) of obtaining a plurality of low-resolution images;

a super-resolution processing step (S3002) of generating a high-resolution image using the plurality of low-resolution images;

a copy-forgery-inhibited pattern detection step (S3003) of detecting a pattern of a copy-forgery-inhibited pattern using the high-resolution image; and

a control step (S3004) of switching between the high-resolution image and the low-resolution image based on the result of the copy-forgery-inhibited pattern detection step to output an image.

EP 2 120 444 A1

**FIG.1**

**FIG.2**

MAIN SCANNING
DIRECTION

SUB SCANNING
DIRECTION

X-DIRECTION

Y-DIRECTION

20

301

302

10

303

θ

FIG.3

FIG.4A ABCDE 401

FIG.4B ABCDE 402

FIG.4C ABCDE 403

FIG.4D ABCDE 404

FIG.4E ABCDE 405

**FIG.5**

**FIG.6**

FIG.7

FIG.8A

FIG.8B

FIG.8C

FIG.8D

MEMORY FOR AREA SENSOR 504

FIG.8E

MEMORY FOR AREA SENSOR 505

FIG.9A

FIG.9B

FIG.9C

FIG.9D

MEMORY FOR
AREA SENSOR 504

FIG.9E

MEMORY FOR
AREA SENSOR 505

FIG.10A

FIG.10B

FIG.10C

FIG.10D

MEMORY FOR
AREA SENSOR 504

FIG.10E

MEMORY FOR
AREA SENSOR 505

FIG.11A

FIG.11B

FIG.11C

FIG.11D

MEMORY FOR AREA SENSOR 64

FIG.11E

MEMORY FOR AREA SENSOR 65

FIG.12A      FIG.12B

FIG.13

# FIG.14B

# FIG.14A

# FIG.14D

MEMORY FOR
AREA SENSOR 1303

# FIG.14C

# FIG.14E

MEMORY FOR
AREA SENSOR 1304

EP 2 120 444 A1

EP 2 120 444 A1

**FIG.15A**

**FIG.15B**

**FIG.15C**

**FIG.15D**

MEMORY FOR
AREA SENSOR 1303

**FIG.15E**

MEMORY FOR
AREA SENSOR 1304

FIG.16A

FIG.16B

FIG.16C

FIG.16D

MEMORY FOR AREA SENSOR 1303

FIG.16E

MEMORY FOR AREA SENSOR 1304

FIG.17A

FIG.17B

FIG.18

OPERATION UNIT 12

LAN 50    WAN 1831    11

CPU 1801    RAM 1802    OPERATION UNIT I/F 1805    NETWORK I/F 1806    MODEM 1807    1810

ROM 1803    HDD 1804

BINARY IMAGE ROTATION SECTION 1808    BINARY IMAGE COMPRESSION/ EXPANSION SECTION 1809

330    1817

COMPRESSION SECTION 1829    COMPRESSION SECTION 1813    EXPANSION SECTION 1818    1819 COMPRESSION SECTION    EXPANSION SECTION 1816

RIP 1828    SCANNER IMAGE PROCESSING SECTION 1812    ROTATION SECTION 1820    SCALE CHANGE SECTION 1821    COLOR SPACE CONVERSION SECTION 1822    BINARY TO MULTI-VALUE CONVERSION SECTION 1823    MULTI-VALUE TO BINARY CONVERSION SECTION 1824    ROTATION SECTION 1850

SCANNER I/F 1811    COPY-FORGERY-INHIBITED PATTERN RECOGNITION SECTION 1852    SUPER-RESOLUTION PROCESSING SECTION 1851    SYNTHESIZING SECTION 1827    THINNING SECTION 1826    MOVEMENT SECTION 1825    PRINTER IMAGE PROCESSING SECTION 1815

PRINTER I/F 1814

SCANNER UNIT 13

PRINTER UNIT 14

EP 2 120 444 A1

38

**FIG.19**

REFERENCE LOW
RESOLUTION IMAGE

LOW RESOLUTION
IMAGES

DISPLACEMENT
AMOUNT um1.vm1

LOW RESOLUTION
IMAGES

SUPER-RESOLUTION
PROCESSING

DISPLACEMENT
AMOUNT um2.vm2

LOW RESOLUTION
IMAGES

DISPLACEMENT
AMOUNT um3.vm3

FIG.20

2102 NEAREST PIEL

f(x0,y0)

f(x1,y0)

2101 GENERATED
PIEL

2105

f(x,y)

f(x0,y1)

f(x1,y1)

2103

2104

◇ PIEL OF OBECT LOWRESOLUTION IMAGE

● OBECT OF SUPER RESOLUTION PROCESSING

# FIG.21

1812

2201 2202 2203 2204

R →
G →
B →

| MASKING PROCESS SECTION |
→ | FILTER PROCESSING SECTION |
→ | HISTOGRAM GENERATION SECTION |
→ | INPUT GAMMA CORRECTION SECTION | → R
→ G
→ B

COLOR/ MONOCHROME DETERMINATION SECTION

COLOR/MONOCHROME DETERMINATION SIGNAL →

2205

CHARACTER/ PHOTO DETERMINATION SECTION

CHARACTER/PHOTO DETERMINATION SIGNAL →

2206

FIG.22

FIG.23

| COPY | TRANSMISSION | BOX |

2401

COPY PERMITTED                                    1

2403  A4    2402  AUTO

2406  2407                                  2404

SHIFT SORT    DOUBLE -SIDE        CHARACTER/PHOTO/MAP

2405    APPLICATION MODE

# FIG.24

| COPY | TRANSMISSION | BOX |
|------|-------------|-----|

COPY-FORGERY-
INHIBITED PATTERN

2501

COLOR BALANCE

MONO COLOR

NEGA/POSI
INVERSION

MIRROR IMAGE

REDUCED LAYOUT

# FIG.25

| COPY | TRANSMISSION | BOX |
|------|-------------|-----|

TOP SECRET

COPY PROHIBITED

2601

INHLID

CONFIDENTIAL

FOR INTERNAL
USE ONLY

COPY

2602

NET

# FIG.26

| COPY | TRANSMISSION | BOX |
|------|--------------|-----|

SIZE

2701 | LARGE | MEDIUM | SMALL |

COLOR

2702 | BLACK | MAGENTA | CYAN |

2703 | OK |

# FIG.27

FIG.28

ORDINARY MANUSCRIPT — 2801

OBTAINING PLURAL IMAGES — 2802

HIGH-RESOLUTION IMAGE GENERATION — 2803

COPY-FORGERY-INHIBITED PATTERN RECOGNITION — 2804

NO COPY-FORGERY-INHIBITED PATTERN IMAGE DATA

PRINT OF HIGH-RESOLUTION IMAGE — 2805

TECHNICAL TEST TEST

MANUSCRIPT WITH COPY-FORGERY-INHIBITED PATTERN

BACKGROUND PORTION

TECHNICAL TEST COPY PROHIBITED TES

LATENT IMAGE PORTION

2901

OBTAINING PLURAL IMAGES

TECHNICAL TEST COPY PROHIBITED TEST

2902

HIGH-RESOLUTION IMAGE GENERATION

TECHNICAL TEST COPY PROHIBITED TEST

2903

COPY-FORGERY-INHIBITED PATTERN RECOGNITION

2904

COPY-FORGERY-INHIBITED PATTERN IMAGE DATA INCLUDED

PRINT ONE IMAGE OF PLURAL HIGH-RESOLUTION IMAGES

TECHNICAL TEST COPY PROHIBITED TEST

2905

FIG. 29

START

OBTAIN PLURAL
IMAGES — S3001

SUPER-RESOLUTION
PROCESSING — S3002

COPY-FORGERY-
INHIBITED PATTERN
RECOGNITION — S3003

S3004

COPY-
FORGERY-INHIBITED
PATTERN RECOGNITION
Y/N?

YES

NO

S3005

HIGH-RESOLUTION IMAGE
GENERATED AT S3002 IS
TRANSMITTED TO PRINTER
IMAGE PROCESSING
SECTION 1815

S3006

ONE OF IMAGES OBTAINED
AT S3001 IS TRANSMITTED
TO PRINTER IMAGE
PROCESSING SECTION 1815

PRINTER IMAGE
PROCESS — S3007

PRINT — S3008

END

FIG.30

MANUSCRIPT
WITH
COPY-
FORGERY-
BACKGROUND INHIBITED
PORTION PATTERN

OBTAINING
PLURAL
IMAGES

HIGH-
RESOLUTION
IMAGE
GENERATION

COPY-
FORGERY-
INHIBITED
PATTERN
IMAGE
DATA
INCLUDED

PRINT ONE
IMAGE OF
PLURAL
HIGH-
RESOLUTION
IMAGES

TECHNICAL
TEST
COPY
PROHIBITED
TES

TECHNICAL
TEST
COPY
PROHIBITED
TEST

TECHNICAL
TEST
COPY
PROHIBITED
TEST

COPY-FORGERY-
INHIBITED
PATTERN
RECOGNITION

TECHNICAL
TEST
COPY
PROHIBITED
TEST

3101

LATENT
IMAGE
PORTION

3102

3103

3104

3105

RESOLUTION AT 3102
IS LARGER THAN A
PREDETERMINED VALUE

IMAGE NUMBER
CONTROL

PRINT OF
HIGH-
RESOLUTION
IMAGE

3106

TECHNICAL
TEST
COPY
PROHIBITED
TEST

TECHNICAL
TEST
COPY
PROHIBITED
TEST

RESOLUTION AT 3102
IS SMALLER THAN A
PREDETERMINED VALUE

3107

3108

FIG.31

FIG.32

BACKGROUND
PORTION

MANUSCRIPT
WITH
COPY-
FORGERY-
INHIBITED
PATTERN

OBTAINING
PLURAL
IMAGES

HIGH
RESOLUTION
IMAGE
GENERATION

COPY-
FORGERY-
INHIBITED
PATTERN
IMAGE
DATA
INCLUDED

PRINT ONE
IMAGE OF
PLURAL
HIGH-
RESOLUTION
IMAGES

TECHNICAL

TEST
COPY
PROHIBITED
TES

3301

LATENT
IMAGE
PORTION

TECHNICAL

TEST
COPY
PROHIBITED
TEST

3302

TECHNICAL

TEST
COPY
PROHIBITED
TEST

3303

COPY-FORGERY-
INHIBITED
PATTERN
RECOGNITION

3304

NUMBER OF
LINES IN THE
BACKGROUND
DETECTION

3305

TECHNICAL

TEST
COPY
PROHIBITED
TEST

3306

NUMBER OF LINES AT
3305 IS LARGER THAN A
PREDETERMINED VALUE

PRINT OF
HIGH-
RESOLUTION
IMAGE

NUMBER OF
IMAGE CONTROL

3307

TECHNICAL

TEST
COPY
PROHIBITED
TEST

TECHNICAL

TEST
COPY
PROHIBITED
TEST

3308

3309

NUMBER OF LINES AT
3305 IS SMALLER THAN A
PREDETERMINED VALUE

FIG.33

EP 2 120 444 A1

START

OBTAIN OF
PLURAL IMAGES — S3401

SUPER-IMAGE
PROCESSING — S3402

COPY-FORGERY-INHIBITED
PATTERN RECOGNITION — S3403

COPY-
FORGERY-INHIBITED
PATTERN RECOGNITION
Y/N — YES

S3403 — NO

DETECTION OF NUMBER
OF LINES IN THE
BACKGROUND AT 3402 — S3409

NUMBER OF
LINES AT 3402 ≥
PREDETERMINED VALUE ? — S3410 — NO

S3405 — YES — S3406 — S3411

TRANSMISSION OF
SUPER-IMAGE GENERATED AT
S3402 TO PRINTER IMAGE
PROCESSING SECTION 1815

TRANSMISSION OF ONE OF
IMAGES OBTAINED AT S3401
IS TRANSMITTED TO PRINTER
IMAGE PROCESSING
SECTION 1815

IMAGE NUMBER
CONTROL

SUPER-RESOLUTION
PROCESSING

S3412

TRANSMISSION OF
HIGH-RESOLUTION IMAGE
GENERATED AT 3412 TO
PRINTER IMAGE PROCESSING
SECTION 1815

S3413

PRINTER IMAGE
PROCESS — S3407

PRINT — S3408

END

FIG.34

54

| | |
|---|---|
| LINE NUMBER A | ONE SHEET |
| LINE NUMBER B | TWO SHEETS |

# FIG.35

CONCENTRATED DOTS

DISPERSED DOTS

FIG.36

FIG.37

IMAGE
VISUALIATIO

MANUSCRIPT
WITH
COPY-
FORGERY-
INHIBITED
PATTERN

BACKGROUND
PORTION

TECHNICAL
TEST
COPY
PROHIBITED
TES

LATENT
IMAGE
PORTION

3801

TECHNICAL
TEST
COPY
PROHIBITED
TEST

3802

TECHNICAL
TEST
COPY
PROHIBITED
TEST

3803

TECHNICAL
TEST
COPY
PROHIBITED
TEST

3804

FIG.38

EP 2 120 444 A1

Europäisches
Patentamt
European
Patent Office
Office européen
des brevets

# EUROPEAN SEARCH REPORT

Application Number

EP 09 15 8764

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2006/139698 A1 (KOWADA TAKESHI [JP] ET AL) 29 June 2006 (2006-06-29) * abstract * * paragraphs [0038], [0063] * ----- | 1-11 | INV. H04N1/00 |
| Y | US 2006/209201 A1 (SPEARS KURT E [US] ET AL) 21 September 2006 (2006-09-21) * figures 11,12 * * paragraphs [0055] - [0058] * ----- | 1-11 | |
| Y | US 6 972 865 B1 (MURAMATSU MIZUKI [JP]) 6 December 2005 (2005-12-06) * figures 15,16 * * column 12, line 51 - column 14, line 55 * ----- | 1-11 | |
| Y | US 2007/171453 A1 (TAMARU JUN [JP]) 26 July 2007 (2007-07-26) * paragraph [0011] * ----- | 6 | |
| Y | US 5 271 095 A (YAMADA KIYOSHI [JP]) 14 December 1993 (1993-12-14) * figure 13 * * column 9, line 49 - column 10, line 22 * ----- | 7 | TECHNICAL FIELDS SEARCHED (IPC) H04N G06T |

The present search report has been drawn up for all claims

| Place of search | Date of completion of the search | Examiner |
|---|---|---|
| Munich | 11 August 2009 | Moorhouse, David |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 09 15 8764

This annex lists the patent family members relating to the patent documents cited in the above-mentioned European search report.
The members are as contained in the European Patent Office EDP file on
The European Patent Office is in no way liable for these particulars which are merely given for the purpose of information.

11-08-2009

| Patent document cited in search report | | Publication date | Patent family member(s) | | Publication date |
|---|---|---|---|---|---|
| US 2006139698 | A1 | 29-06-2006 | JP 2006186976 | A | 13-07-2006 |
| US 2006209201 | A1 | 21-09-2006 | NONE | | |
| US 6972865 | B1 | 06-12-2005 | NONE | | |
| US 2007171453 | A1 | 26-07-2007 | JP 4143655 | B2 | 03-09-2008 |
| | | | JP 2007174615 | A | 05-07-2007 |
| US 5271095 | A | 14-12-1993 | JP 2165775 | A | 26-06-1990 |

For more details about this annex : see Official Journal of the European Patent Office, No. 12/82

**REFERENCES CITED IN THE DESCRIPTION**

**Patent documents cited in the description**

- JP 2001197297 A
- JP 2006229316 A
- WO 2004068862 A